# EUROPEAN PATENT APPLICATION

(11) **EP 4 660 946 A1**
(43) Date of publication of application: **10.12.2025**
(21) Application number: 23920026.4
(22) Date of filing: 28.12.2023
(51) Int. Cl.: G06T 7/70, B25J 13/08

(54) **PROCESSING DEVICE AND PROGRAM**

(30) Priority: 31.01.2023 JP 2023013072
(71) Applicant: Kyocera Corporation, Kyoto-shi, Kyoto 612-8501 (JP)
(72) Inventor: MINAMIDE Hayato, Kyoto-shi, Kyoto 612-8501 (JP)
(74) Representative: TBK
(86) International application number: PCT/JP2023/047169
(87) International publication number: WO 2024/161891

(57) **Abstract**

A processing device includes a controller that (s2) obtains, from an imaging device, a first image of an object in a first orientation. The object includes a plurality of surfaces having appearances similar to each other. The controller (s3) identifies, from the plurality of surfaces, a target surface facing the imaging device. The controller further (s5) obtains a second image of the object in a second orientation different from the first orientation. The controller (s9) identifies the target surface based on the first image and the second image.

## Description

### TECHNICAL FIELD

The present disclosure relates to a technique for identifying a surface of an object facing an imaging device.

### BACKGROUND OF INVENTION

Patent Literature 1 describes a technique for determining whether a component sucked by a suction noise is in an intended orientation or reversed.

### CITATION LIST

### PATENT LITERATURE

Patent Literature 1: Japanese Unexamined Patent Application Publication No. 2009-130034

### SUMMARY

One or more aspects of the present disclosure are directed to a processing device and a program. In one embodiment, the processing device includes a controller that obtains, from an imaging device, a first image of an object in a first orientation. The object includes a plurality of surfaces having appearances similar to each other. The controller identifies, from the plurality of surfaces, a target surface facing the imaging device. The controller further obtains a second image of the object in a second orientation different from the first orientation. The controller identifies the target surface based on the first image and the second image.

In one embodiment, the program causes a computer to function as the processing device described above.

### BRIEF DESCRIPTION OF THE DRAWINGS

FIG. 1 is a schematic diagram of an example processing device.
FIG. 2 is a schematic diagram of an object being imaged by an imaging device in an example.
FIG. 3 is a schematic diagram of an example of the object.
FIG. 4 is a flowchart of an example operation of the processing device.
FIG. 5 is a schematic diagram of the object as viewed from the imaging device in an example.
FIG. 6 is a schematic diagram of the object as viewed from the imaging device in an example.
FIG. 7 is a schematic diagram of the object as viewed from the imaging device in an example.
FIG. 8 is a schematic diagram of the object as viewed from the imaging device in an example.
FIG. 9 is a schematic diagram of an example rotation axis.
FIG. 10 is a schematic diagram of the object rotating in an example.
FIG. 11 is a flowchart of an example operation of the processing device.
FIG. 12 is a schematic diagram of the object held by a robot being imaged by the imaging device in an example.
FIG. 13 is a flowchart of an example operation of the processing device.
FIG. 14 is a flowchart of an example operation of the processing device.
FIG. 15 is a flowchart of an example operation of the processing device.
FIG. 16 is a flowchart of an example operation of the processing device.

### DESCRIPTION OF EMBODIMENTS

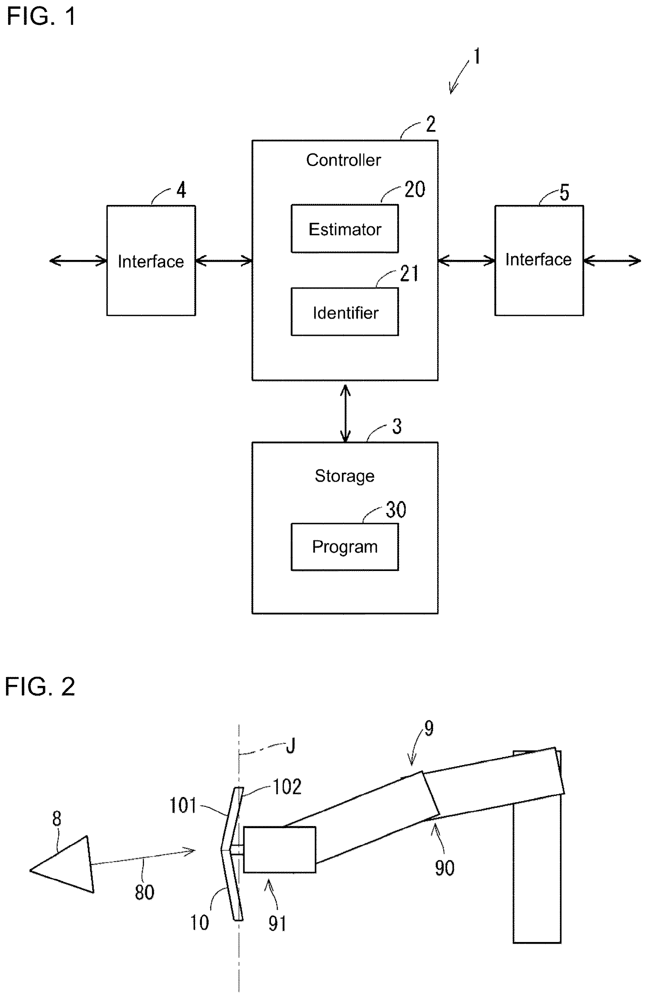

FIG. 1 is a schematic diagram of a processing device 1 with an example structure. The processing device 1 can identify a surface of an object 10 facing an imaging device 8 based on images generated by the imaging device 8 that captures images of the object 10. FIG. 2 is a schematic diagram of the object 10 being imaged by the imaging device 8 in an example.

As illustrated in FIG. 2, the imaging device 8 captures images of the object 10 held by, for example, a robot 9. The imaging device 8 is also referred to as a camera. The imaging device 8 can generate, for example, two-dimensional color images. Color images are also referred to as, for example, RGB images. Images generated by the imaging device 8 may hereafter be simply referred to as captured images.

The robot 9 includes, for example, an arm 90 and an end effector 91 connected to the arm 90. The arm 90 includes multiple joints. A change in the amount of rotation of at least one of the multiple joints changes the orientation of the arm 90. A change in the orientation of the arm 90 changes the position and the orientation of the end effector 91.

The end effector 91 can hold the object 10. The end effector 91 may be a holder that holds the object 10. The position and the orientation of the object 10 held by the end effector 91 change based on changes in the position and the orientation of the end effector 91. In other words, the position and the orientation of the object 10 change based on the movement of the arm 90. For example, the end effector 91 may suck the object 10 or grip the object 10 with multiple fingers to hold the object 10.

The object 10 is placed in, for example, a container. The robot 9 holds the object 10 in the container with the end effector 91 and moves the arm 90 to transfer the object 10 being held to a position in front of the imaging device 8. In other words, the robot 9 changes the orientation of the arm 90 to transfer the object 10 being held to a position at which the object 10 is imaged by the imaging device 8. In this state, for example, the robot 9 positions the object 10 to cause, among outer surfaces of the object 10, a surface opposite the surface held with the end effector 91 to face the imaging device 8. The processing device 1 identifies the surface facing the imaging device 8 among the outer surfaces of the object 10 based on the captured images of the object 10. The surface facing the imaging device 8 among the outer surfaces of the object 10 is identified to identify the orientation of the object 10 held by the robot 9. In this example, the surface, among the outer surfaces of the object 10, opposite the surface held with the end effector 91 faces the imaging device 8. The surface facing the imaging device 8 among the outer surfaces of the object 10 is thus identified to allow identification of the surface of the object 10 held by the robot 9. In other words, the processing device 1 identifies the surface facing the imaging device 8 among the outer surfaces of the object 10 and determines that the surface held by the robot 9 is the surface opposite the identified surface.

The processing device 1 can control, for example, the robot 9. The processing device 1 may control the operation of the robot 9 based on the orientation of the object 10 held by the robot 9. For example, the processing device 1 causes the robot 9 to transfer the object 10 to some place when the end effector 91 holds one surface of the object 10, and to some other place when the end effector 91 holds another surface of the object 10. Note that the operation example of the robot 9 is not limited to the above. The object 10 may be held by a device or an entity other than the robot 9.

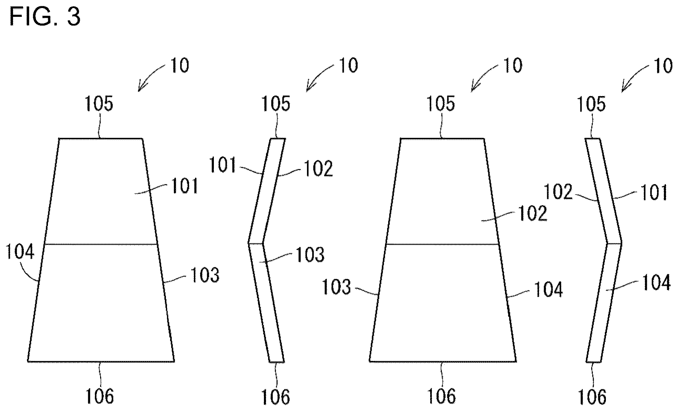

FIG. 3 is a schematic diagram of an example of the object 10. The object 10 is, for example, a V-shaped plate. The object 10 includes, for example, a first main surface 101 and a second main surface 102 opposite each other. The first main surface 101 and the second main surface 102 have, for example, a slightly elongated trapezoidal profile with a height greater than the dimension of a lower base. The first main surface 101 bent in a V shape protrudes outward in a middle portion in its longitudinal direction (in other words, a height direction of the trapezoid defined by the profile of the first main surface 101). The second main surface 102 bent in a V shape is recessed inward in a middle portion in its longitudinal direction.

The leftmost diagram in FIG. 3 illustrates the object 10 as viewed from a position facing the first main surface 101 in an example. The third diagram from the left in FIG. 3 illustrates the object 10 as viewed from a position facing the second main surface 102. The second diagram from the left in FIG. 3 illustrates the leftmost diagram of object 10 as viewed from the right of the figure. The rightmost diagram in FIG. 3 illustrates the third diagram of object 10 from the left as viewed from the right of the figure. The shape of the object 10 is hereafter described using the top, the bottom, the right, and the left respectively corresponding to the top, the bottom, the right, and the left of the leftmost object 10 in FIG. 3. The first main surface 101 may be referred to as a front surface 101. The second main surface 102 may be referred to as a back surface 102. The front surface 101 may also be referred to as a front side surface 101.

The object 10 includes a right surface 103, a left surface 104, an upper surface 105, and a lower surface 106, in addition to the front surface 101 and the back surface 102. The right surface 103, the left surface 104, the upper surface 105, and the lower surface 106 may also be referred to as a right end surface 103, a left end surface 104, an upper end surface 105, and a lower end surface 106 respectively. The object 10 is bilaterally symmetric and thin. The right surface 103 and the left surface 104 may each be hereafter referred to as a side surface unless they are to be distinguished from each other. The right surface 103 may also be referred to as a right side surface 103. The left surface 104 may also be referred to as a left side surface 104.

To hold the object 10 in the container, the robot 9 holds, for example, one of the front surface 101 or the back surface 102. For example, when the object 10 is placed in the container with the front surface 101 of the object 10 facing an opening (upper portion) of the container, the robot 9 holds the front surface 101 of the object 10. When the object 10 is placed in the container with the back surface 102 of the object 10 facing the opening of the container, the robot 9 holds the back surface 102 of the object 10. When holding the object 10 in the container, the robot 9 does not identify which of the front surface 101 or the back surface 102 of the object 10 is facing the opening of the container. Thus, the robot 9 holds the object 10 without identifying which of the front surface 101 or the back surface 102 is the surface being held.

The object 10 includes multiple surfaces similar to each other in appearance. The multiple surfaces are similar to each other in appearance when viewed without the orientation of the object 10 changed. Each of the multiple surfaces of the object 10 similar to each other in appearance may be held by, for example, the robot 9. The processing device 1 identifies, of the multiple surfaces of the object 10 similar to each other in appearance, the surface facing the imaging device 8 (also referred to as a target surface) based on the captured images of the object 10. Note that an object with its orientation not determined uniquely when, for example, imaged by the imaging device 8 may be used as the object 10 including multiple surfaces similar to each other in appearance.

In this example, the front surface 101 and the back surface 102 of the object 10 are similar to each other. The object 10 remaining in the same orientation has similar views from a position facing the front surface 101 and from a position facing the back surface 102. In other words, the object 10 remaining in the same orientation has similar appearances when viewed from a position facing the front surface 101 and when viewed from a position facing the back surface 102. The processing device 1 identifies, of the front surface 101 and the back surface 102, the target surface facing the imaging device 8 based on the captured images of the object 10.

Note that the shape of the object 10 is not limited to the example in FIG. 3. For example, the object 10 may include three or more surfaces similar to one another in appearance.

The multiple surfaces of the object 10 similar to each other in appearance may hereafter be referred to as multiple specific surfaces. In other words, the processing device 1 identifies, of the multiple specific surfaces, a specific surface facing the imaging device 8. The views of the specific surfaces of the object 10 are similar to each other.

The robot 9 holding the object 10 positions the object 10 to cause the surface of the object 10 opposite the surface being held to face the imaging device 8. Thus, when the front surface 101 of the object 10 is held by the robot 9, the object 10 is positioned with the back surface 102 facing the imaging device 8. The state in which the back surface 102 of the object 10 faces the imaging device 8 can be the state in which the imaging device 8 is located toward to the back surface 102. When the back surface 102 of the object 10 faces the imaging device 8, the imaging device 8 captures an image of the object 10 from a position facing the back surface 102. When the back surface 102 of the object 10 is held by the robot 9 as illustrated in FIG. 2, the object 10 is positioned with the front surface 101 facing the imaging device 8. The state in which the front surface 101 of the object 10 faces the imaging device 8 can be the state in which the imaging device 8 is located toward to the front surface 101. When the front surface 101 of the object 10 faces the imaging device 8, the imaging device 8 captures an image of the object 10 from a position facing the front surface 101.

When the front surface 101 of the object 10 is held by the robot 9, the processing device 1 identifies the back surface 102 as the surface facing the imaging device 8, or specifically, as the target surface. When the back surface 102 of the object 10 is held by the robot 9, the processing device 1 identifies the front surface 101 as the surface facing the imaging device 8, or specifically, as the target surface.

The processing device 1 is, for example, a computer. The processing device 1 can control the robot 9 in addition to, for example, identifying the target surface of the object 10 based on the captured images. The processing device 1 also functions as a robot control device that controls the robot 9. Note that the robot control device that controls the robot 9 may be prepared separately from the processing device 1.

As illustrated in FIG. 1, the processing device 1 includes, for example, a controller 2, a storage 3, an interface 4, and an interface 5. The processing device 1 may be, for example, a processing circuit.

The interface 4 can communicate with the imaging device 8. The controller 2 can obtain images generated by the imaging device 8 through the interface 4. The interface 4 may be, for example, an interface circuit, a communication unit, or a communication circuit. The interface 4 may perform wired or wireless communication with the imaging device 8.

The interface 5 can communicate with the robot 9. The controller 2 can control the robot 9 through the interface 5. The interface 5 may be, for example, an interface circuit, a communication unit, or a communication circuit. The interface 5 may perform wired or wireless communication with the robot 9.

The controller 2 can control the other components of the processing device 1 to centrally manage the operation of the processing device 1. The controller 2 may be, for example, a control circuit. The controller 2 includes at least one processor to provide control and processing capabilities for implementing various functions, as described in more detail below.

In various embodiments, at least one processor may be a single integrated circuit (IC), or may be multiple ICs or multiple discrete circuits, or both connected to one another for mutual communication. At least one processor may be implemented using any of various known techniques.

In one embodiment, the processor includes one or more circuits or units configured to perform one or more data computation procedures or processes by, for example, executing instructions stored in an associated memory. In another embodiment, the processor may be firmware (e.g., a discrete logic component) configured to perform one or more data computation procedures or processes.

In various embodiments, the processor includes one or more processors, controllers, microprocessors, microcontrollers, application-specific integrated circuits (ASICs), digital signal processors, programmable logic devices, field programmable gate arrays, combinations of any of these devices or configurations, or combinations of other known devices and configurations. The processor may perform the functions described below.

The controller 2 may include, for example, a central processing unit (CPU) as the processor. The storage 3 may include a non-transitory recording medium readable by the CPU in the controller 2, such as a read-only memory (ROM) or a random-access memory (RAM). The storage 3 stores, for example, a program 30 for controlling the processing device 1. Various functions of the controller 2 are implemented by, for example, the CPU in the controller 2 executing the program 30 in the storage 3.

Note that the structure of the controller 2 is not limited to the above example. For example, the controller 2 may include multiple CPUs. The controller 2 may include at least one digital signal processor (DSP). The functions of the controller 2 may be implemented entirely or partially by a hardware circuit, without using software to implement the functions. The storage 3 may include a non-transitory computer-readable recording medium other than the ROM and the RAM. The storage 3 may include, for example, a small hard disk drive and a solid-state drive (SSD).

The controller 2 can perform a target surface identification process to identify the target surface (specifically, the surface facing the imaging device 8) of the object 10 based on captured images. The controller 2 includes, for example, an estimator 20 and an identifier 21. For example, the CPU in the controller 2 executes the program 30 in the storage 3 to implement, as functional blocks, the estimator 20 and the identifier 21 in the controller 2. Note that all the functions of the estimator 20 or part of the functions of the identifier 21 may be implemented by a hardware circuit, without using software to implement the functions. The same or a similar structure applies to the identifier 21.

The estimator 20 estimates the orientation of the object 10 based on captured images. The identifier 21 identifies the surface (specifically, the target surface) facing the imaging device 8 of the multiple surfaces (specifically, the multiple specific surfaces) of the object 10 similar to each other in appearance. In this example, the identifier 21 identifies, of the front surface 101 and the back surface 102 similar to each other in appearance, the surface facing the imaging device 8. The object 10 including the front surface 101 facing the imaging device 8 may hereafter be referred to as a front-facing object 10. The object 10 including the back surface 102 facing the imaging device 8 may hereafter be referred to as a back-facing object 10. In other words, the identifier 21 determines whether the object 10 is front-facing or back-facing. When the object 10 is front-facing, the imaging device 8 can capture an image of the object 10 from a position facing the front surface 101. When the object 10 is back-facing, the imaging device 8 can capture an image of the object 10 from a position facing the back surface 102.

### Example of Target Surface Identification Process

In this example, the front surface 101 and the back surface 102 of the object 10 are similar to each other in appearance. Thus, the controller 2 cannot easily determine whether the object 10 is front-facing or back-facing based simply on a single captured image of the object 10.

For example, a captured image may simply include the front surface 101 among the outer surfaces of the object 10. In this case, the controller 2 can identify the object 10 as being front-facing when the controller 2 can identify the front surface 101 in the captured image through image processing performed on the captured image. However, the front surface 101 and the back surface 102 are similar to each other in appearance. Thus, the controller 2 may fail to identify the surface in the captured image as the front surface 101 or the back surface 102. In this case, the controller 2 cannot identify the object 10 as being front-facing.

In the target surface identification process in this example, the target surface of the object 10 is identified not based on a single captured image but based on two captured images (a first image and a second image) of the object 10 in different orientations. This improves the accuracy of identifying the target surface.

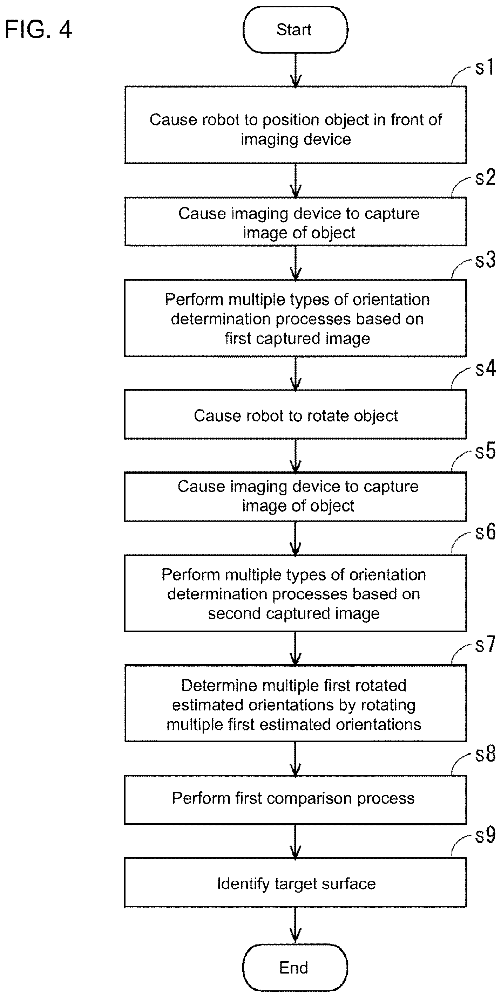

FIG. 4 is a flowchart of an example of the target surface identification process performed by the controller 2. As illustrated in FIG. 4, in step s1, the controller 2 controls the robot 9 holding the object 10 to position the object 10 in front of the imaging device 8. The robot 9 positions, under control of the controller 2, the object 10 in front of the imaging device 8 to cause the imaging device 8 to simply capture, for example, an image of the surface, among the outer surfaces of the object 10, opposite the surface being held. When, for example, the robot 9 holds the back surface 102, the object 10 is positioned to cause the imaging device 8 to simply capture an image of the front surface 101. In this case, the captured image includes the object 10 appearing as illustrated in the leftmost diagram in FIG. 3. More specifically, the object 10 as viewed from the imaging device 8 appears as in the leftmost diagram in FIG. 3. When the robot 9 holds the front surface 101, the object 10 is positioned to cause the imaging device 8 to simply capture an image of the back surface 102. In this case, the captured image includes the object 10 appearing as illustrated in the third diagram from the left in FIG. 3. More specifically, the object 10 as viewed from the imaging device 8 appears as in the third diagram from the left in FIG. 3.

In step s2, the controller 2 causes the imaging device 8 to capture an image of the object 10. The orientation of the object 10 as viewed from the imaging device 8 capturing an image of the object 10 in step s2 is referred to as a first orientation. The first orientation may be the orientation of the object 10 as viewed from the imaging device 8 when the object 10 is positioned to cause the imaging device 8 to simply capture an image of the surface, among the outer surfaces of the object 10, opposite the surface held by the robot 9. Step s2 is performed to cause the imaging device 8 to capture an image of the object 10 in the first orientation. The imaging device 8 generates a captured image (also referred to as a first captured image) of the object 10 in the first orientation and outputs the captured image to the controller 2. When the robot 9 holds the back surface 102 of the object 10, the first captured image simply includes the front-facing object 10, or specifically, the front surface 101, among the outer surfaces of the object 10. When the robot 9 holds the front surface 101 of the object 10, the first captured image simply includes the back-facing object 10, or specifically, the back surface 102, among the outer surfaces of the object 10.

The estimator 20 can perform multiple types of orientation estimation processes corresponding to the respective multiple specific surfaces to estimate the orientation of the object 10 based on captured images. Each of the multiple types of orientation estimation processes is performed for the corresponding specific surface facing the imaging device 8. In step s3 subsequent to step s2, the estimator 20 performs the multiple types of orientation estimation processes based on the first captured image. Multiple estimated orientations resulting from the respective multiple types of orientation estimation processes performed based on the first captured image are each hereafter referred to as a first estimated orientation.

In this example, the estimator 20 can perform an orientation estimation process (also referred to as an orientation estimation process for the front surface) corresponding to the front surface 101. This orientation estimation process is performed for the front surface 101 facing the imaging device 8. The estimator 20 can also perform an orientation estimation process (also referred to as an orientation estimation process for the back surface) corresponding to the back surface 102. This orientation estimation process is performed for the back surface 102 facing the imaging device 8. When the front surface 101 of the object 10 faces the imaging device 8, or in other words, when the imaging device 8 captures an image of the object 10 from a position facing the front surface 101, the orientation estimation process for the front surface is performed to increase the accuracy of estimating the orientation of the object 10. When the back surface 102 of the object 10 faces the imaging device 8, or in other words, when the imaging device 8 captures an image of the object 10 from a position facing the back surface 102, the orientation estimation process for the back surface is performed to increase the accuracy of estimating the orientation of the object 10. For the front-facing object 10, the accuracy of estimating the orientation of the object 10 is higher when the orientation estimation process for the front surface is performed than when the orientation estimation process for the back surface is performed. For the back-facing object 10, the accuracy of estimating the orientation of the object 10 is higher when the orientation estimation process for the back surface is performed than when the orientation estimation process for the front surface is performed. The orientation estimation process for the front surface may hereafter be simply referred to as a front surface process. The orientation estimation process for the back surface may hereafter be simply referred to as a back surface process.

In the orientation estimation processes, for example, template matching is performed to compare the captured image with multiple templates associated with the respective orientations of the object 10. The templates, which are also referred to as template images, are captured images pre-generated by the imaging device 8. The storage 3 stores multiple front surface templates for the front surface process and multiple back surface templates for the back surface process.

The multiple front surface templates include many images of the object 10 captured by the imaging device 8 at various angles from positions facing the front surface 101. The multiple back surface templates include many images of the object 10 captured by the imaging device 8 at various angles from positions facing the back surface 102.

Each of the templates is associated with the orientation of the object 10 when the template is generated by the imaging device 8. In other words, each of the templates is associated with the orientation of the object 10 in the template. The orientations associated with the templates are represented in, for example, a coordinate system of the imaging device 8 (also referred to as an imaging device coordinate system). The imaging device coordinate system is a three-dimensional orthogonal coordinate system set for the imaging device 8. More specifically, the imaging device coordinate system represents the real space as viewed from the imaging device 8 as a coordinate space.

To compare the captured image with each of the templates in the orientation estimation processes, the estimator 20 performs image processing including, for example, binarization on the captured image and each of the templates to extract the outline of the object 10 in the captured image as a first outline and extract the outline of the object 10 included in the template as a second outline. The outline of the object 10 is also referred to as an external outline. The estimator 20 then compares the first outline with the second outline to calculate a degree of similarity between the two outlines. This degree of similarity indicates a degree of similarity between the captured image and the template. The degree of similarity between the captured image and the template is also referred to as a score of matching. The degree of similarity between the captured image and the template may hereafter be referred to as a matching score.

To compare the captured image with the multiple front surface templates in the orientation estimation process for the front surface, the estimator 20 determines, for each of the multiple front surface templates, a matching score with the captured image as described above. The estimator 20 then determines, as an estimated orientation of the object 10 in the captured image, the orientation associated with a front surface template having the highest matching score with the captured image among the multiple front surface templates. In the same or a similar manner, to compare the captured image with the multiple back surface templates in the orientation estimation process for the back surface, the estimator 20 determines, for each of the multiple back surface templates, a matching score with the captured image. The estimator 20 then determines, as an estimated orientation of the object 10 in the captured image, the orientation associated with a back surface template having the highest matching score with the captured image among the multiple back surface templates.

In step s3, the estimator 20 performs the orientation estimation process for the front surface and the orientation estimation process for the back surface based on the first captured image obtained in step s2. In the orientation estimation process for the front surface based on the first captured image, the estimator 20 determines, for each of the multiple front surface templates, a matching score with the first captured image. The estimator 20 then determines, as the first estimated orientation of the object 10 in the first captured image, the orientation associated with a front surface template having the highest matching score with the first captured image among the multiple front surface templates. This first estimated orientation is referred to as a first estimated orientation resulting from the front surface process.

In the same or a similar manner, the estimator 20 determines, for each of the multiple back surface templates, a matching score with the first captured image in the orientation estimation process for the back surface based on the first captured image. The estimator 20 then determines, as the first estimated orientation of the object 10 in the first captured image, the orientation associated with a back surface template having the highest matching score with the first captured image among the multiple back surface templates. This first estimated orientation is referred to as a first estimated orientation resulting from the back surface process. The first estimated orientations are represented in the imaging device coordinate system.

In step s3, the controller 2 has yet to determine which of the front surface 101 or the back surface 102 is facing the imaging device 8. In other words, the controller 2 has yet to determine whether the object 10 is front-facing or back-facing. As described above, the estimator 20 thus performs the orientation estimation process for the front surface by estimating the orientation of the object 10 with the front surface 101 of the object 10 assumed to be facing the imaging device 8 (in other words, with the object 10 assumed to be front-facing). The estimator 20 performs the orientation estimation process for the back surface by estimating the orientation of the object 10 with the back surface 102 of the object 10 assumed to be facing the imaging device 8 (in other words, with the object 10 assumed to be back-facing).

For example, the first captured image may simply include the front surface 101 among the outer surfaces of the object 10 when the object 10 is front-facing. In this case, the first estimated orientation resulting from the front surface process is close to the actual orientation (specifically, the first orientation) of the object 10 as viewed from the imaging device 8. In contrast, the first estimated orientation resulting from the back surface process differs greatly from the actual orientation of the object 10 as viewed from the imaging device 8. In this example, the front surface 101 and the back surface 102 are similar to each other in appearance. The first estimated orientation resulting from the back surface process is thus the same as the first estimated orientation obtained through the back surface process performed when the first captured image simply includes the back surface 102 among the outer surfaces of the object 10. The first estimated orientation resulting from the back surface process is close to the orientation of the object 10 as viewed from the imaging device 8 when the object 10 is positioned to cause the imaging device 8 to simply capture an image of the back surface 102.

The first captured image may simply include the back surface 102 among the outer surfaces of the object 10 when the object 10 is back-facing. In this case, the first estimated orientation resulting from the back surface process is close to the actual orientation of the object 10 as viewed from the imaging device 8. In contrast, the first estimated orientation resulting from the front surface process differs greatly from the actual orientation of the object 10 as viewed from the imaging device 8. The first estimated orientation resulting from the front surface process is the same as the first estimated orientation obtained through the front surface process performed when the first captured image simply includes the front surface 101 among the outer surfaces of the object 10. The first estimated orientation resulting from the front surface process is close to the orientation of the object 10 as viewed from the imaging device 8 when the object 10 is positioned to cause the imaging device 8 to simply capture an image of the front surface 101.

After the first estimated orientation resulting from the front surface process and the first estimated orientation resulting from the back surface process are determined in step s3, the controller 2 causes the robot 9 to rotate the object 10 in step s4. In step s4, the robot 9 moves the arm 90 to rotate the object 10 about a predetermined rotation axis J (refer to FIG. 2) by a predetermined angle W. The object 10 rotates together with the end effector 91. More specifically, the object 10 and the end effector 91 rotate integrally. In the robot 9, the end effector 91 holding the object 10 rotates about the rotation axis J by the angle W in response to movement of the arm 90. This rotates the object 10 about the rotation axis J by the angle W. The orientation of the object 10 that has rotated about the rotation axis J by the angle W and viewed from the imaging device 8 is referred to as a second orientation. In step s5, the controller 2 then causes the imaging device 8 to capture an image of the object 10 in the second orientation. The captured image generated by the imaging device 8 in step s5 is referred to as a second captured image. The second captured image includes the object 10 in the second orientation rotated from the first orientation.

Note that the object 10 and the imaging device 8 rotate relative to each other in one or more embodiments of the present disclosure. The imaging device 8 may rotate as described later. Both the object 10 and the imaging device 8 may rotate. Multiple imaging devices 8 may be prepared and arranged to form the predetermined angle W between an imaginary straight line connecting one of the multiple imaging devices 8 and the object 10 and an imaginary straight line connecting another of the multiple imaging devices 8 and the object 10. A first imaging device 8 may obtain the first captured image. A second imaging device 8 may obtain the second captured image.

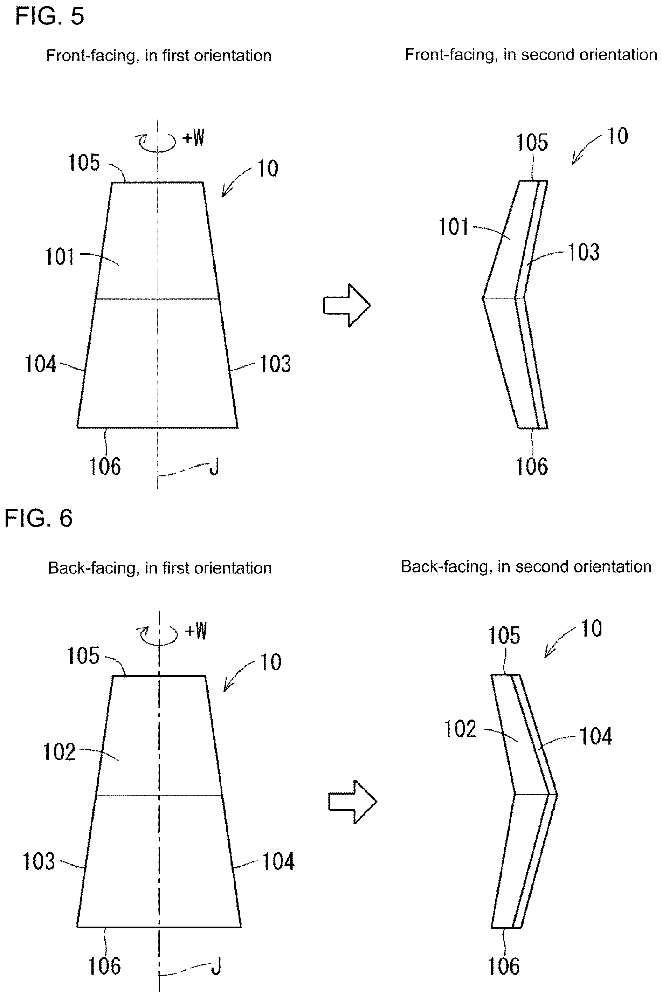

FIGs. 5 and 6 are each a schematic diagram of the object 10 rotating about the rotation axis J by the angle W in an example. The left diagram in FIG. 5 illustrates the front-facing object 10 in the first orientation as viewed from the imaging device 8. The right diagram in FIG. 5 illustrates the front-facing object 10 in the second orientation as viewed from the imaging device 8. More specifically, the right diagram in FIG. 5 illustrates the object 10 as viewed from the imaging device 8 after the front-facing object 10 in the first orientation is rotated about the rotation axis J by the predetermined angle W. The left diagram in FIG. 6 illustrates the back-facing object 10 in the first orientation as viewed from the imaging device 8. The right diagram in FIG. 6 illustrates the back-facing object 10 in the second orientation as viewed from the imaging device 8. More specifically, the right diagram in FIG. 6 illustrates the object 10 as viewed from the imaging device 8 after the back-facing object 10 in the first orientation is rotated about the rotation axis J by the predetermined angle W. In other words, the object 10 as viewed from the imaging device 8 has the same view as the object 10 in the captured images.

The rotation axis J is, for example, defined to pass through the object 10. For example, the rotation axis J is defined to extend parallel to a vertical direction of the object 10 when the object 10 in the first orientation and the rotation axis J are viewed from the imaging device 8. The rotation axis J is defined to pass through the center of the object 10 in a lateral direction of the object 10 when the object 10 in the first orientation and the rotation axis J are viewed from the imaging device 8. For example, the rotation axis J is defined to extend perpendicular or substantially perpendicular to an optical axis 80 (refer to FIG. 2) of the imaging device 8. The controller 2 defines the rotation axis J based on the first captured image. The rotation axis J may be predefined to cause, with each of the specific surfaces assumed to be facing the imaging device 8, the appearances of the object 10 rotated about the rotation axis J to differ as greatly as possible for each of the specific surfaces. Rotation of the object 10 about the rotation axis J is hereafter simply referred to as rotation of the object 10.

The angle W is set to cause, when the object 10 in the first orientation with a specific surface (the front surface 101 or the back surface 102) facing the imaging device 8 is rotated by the angle W, the imaging device 8 to simply capture an image of the specific surface and an adjacent surface (the right surface 103 or the left surface 104) continuous with the specific surface among the outer surfaces of the object 10. More specifically, the angle W is set to cause, when the object 10 in the first orientation with a specific surface facing the imaging device 8 is rotated by the angle W, the imaging device 8 to capture an image of a side surface continuous with the specific surface partly facing the imaging device 8.

In one or more embodiments of the present disclosure, a clockwise rotation angle about the rotation axis J when the rotation axis J is viewed from above the object 10 is indicated with a positive (plus) sign. A counterclockwise rotation angle about the rotation axis J when the rotation axis J is viewed from above the object 10 is indicated with a negative (minus) sign. In step s4, the robot 9 rotates the object 10 about the rotation axis J by, for example, an angle +W to change the orientation of the object 10 from the first orientation to the second orientation. Note that the clockwise rotation angle about the rotation axis J when the rotation axis J is viewed from above the object 10 may be indicated with a negative (minus) sign, and the counterclockwise rotation angle about the rotation axis J when the rotation axis J is viewed from above the object 10 may be indicated with a positive (plus) sign.

When the front-facing object 10 in the first orientation is rotated by the angle +W, the front surface 101 and the right surface 103 (in other words, the right side surface 103) are viewed from the imaging device 8 among the outer surfaces of the object 10 as illustrated in FIG. 5. Thus, when the imaging device 8 captures an image of the front-facing object 10 in the second orientation in step s5, the second captured image simply includes the front surface 101 and the right surface 103 among the outer surfaces of the object 10.

When the back-facing object 10 in the first orientation is rotated by the angle +W, the back surface 102 and the left surface 104 (in other words, the left side surface 104) are viewed from the imaging device 8 among the outer surfaces of the object 10 as illustrated in FIG. 6. Thus, when the imaging device 8 captures an image of the back-facing object 10 in the second orientation in step s5, the second captured image simply includes the back surface 102 and the left surface 104 among the outer surfaces of the object 10.

As illustrated in FIGs. 5 and 6, the front-facing object 10 in the first orientation as viewed from the imaging device 8 is similar to the back-facing object 10 in the first orientation as viewed from the imaging device 8. In other words, the front-facing object 10 in the first orientation in the first captured image and the back-facing object 10 in the first orientation in the first captured image in a manner look similar to each other. In contrast, the front-facing object 10 in the second orientation as viewed from the imaging device 8 differs greatly from the back-facing object 10 in the second orientation as viewed from the imaging device 8. In other words, the front-facing object 10 in the second orientation in the second captured image and the back-facing object 10 in the second orientation in the second captured image in a manner look greatly different from each other.

As described above, the appearance of the object 10 in the first captured image is substantially the same, independently of the specific surface facing the imaging device 8 when the first captured image is generated. The appearance of the object 10 in the second captured image changes greatly based on the specific surface facing the imaging device 8 when the first captured image is generated. For example, the appearance of the object 10 in the first captured image is substantially the same (as in the left diagrams in FIGs. 5 and 6), independently of whether the specific surface facing the imaging device 8 when the first captured image is generated is the front surface 101 or the back surface 102. The appearance of the object 10 (in the right diagram in FIG. 5) in the second captured image for the first captured image generated with the front surface 101 facing the imaging device 8 differs greatly from the appearance of the object 10 (in the right diagram in FIG. 6) in the second captured image for the first captured image generated with the back surface 102 facing the imaging device 8.

In step s6 subsequent to step s5, the estimator 20 performs the multiple types of orientation estimation processes based on the second captured image as in step s3. Multiple estimated orientations resulting from the multiple types of orientation estimation processes performed based on the second captured image are each hereafter referred to as a second estimated orientation.

In this example, in step s6, the estimator 20 performs the orientation estimation process for the front surface and the orientation estimation process for the back surface based on the second captured image. In the orientation estimation process for the front surface based on the second captured image, the estimator 20 determines, for each of the multiple front surface templates, a matching score with the second captured image. The estimator 20 then determines, as the second estimated orientation of the object 10 in the second captured image, the orientation associated with a front surface template having the highest matching score with the second captured image among the multiple front surface templates. This second estimated orientation is referred to as a second estimated orientation resulting from the front surface process.

In the same or a similar manner, the estimator 20 determines, for each of the multiple back surface templates, a matching score with the second captured image in the orientation estimation process for the back surface based on the second captured image. The estimator 20 then determines, as the second estimated orientation of the object 10 in the second captured image, the orientation associated with a back surface template having the highest matching score with the second captured image among the multiple back surface templates. This second estimated orientation is referred to as a second estimated orientation resulting from the back surface process. The second estimated orientations are represented in the imaging device coordinate system.

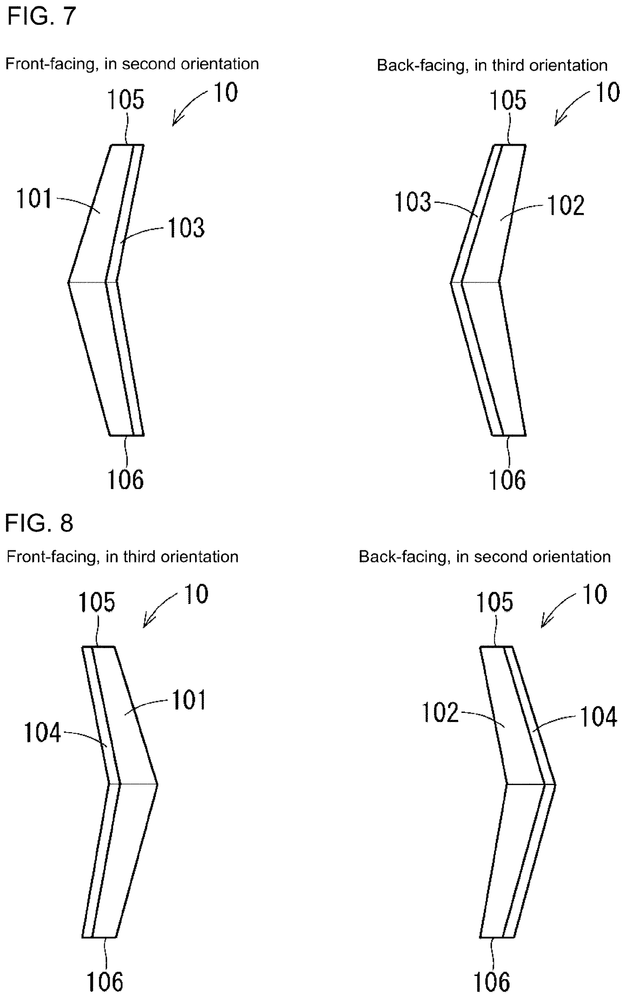

For example, the second captured image may include the front-facing object 10 in the second orientation (refer to FIG. 5). In this case, the second estimated orientation resulting from the front surface process is close to the actual orientation of the object 10 (specifically, the second orientation of the front-facing object 10) as viewed from the imaging device 8. In contrast, the second estimated orientation resulting from the back surface process differs greatly from the actual orientation of the object 10 as viewed from the imaging device 8. The orientation of the object 10 as viewed from the imaging device 8 after the object 10 in the first orientation is rotated about the rotation axis J by an angle -W is referred to as a third orientation. The third orientation of the front-facing object 10 is the orientation of the object 10 as viewed from the imaging device 8 after the front-facing object 10 in the first orientation is rotated about the rotation axis J by the angle -W. The third orientation of the back-facing object 10 is the orientation of the object 10 as viewed from the imaging device 8 after the back-facing object 10 in the first orientation is rotated about the rotation axis J by the angle -W. FIG. 7 is a schematic diagram of the front-facing object 10 in the second orientation as viewed from the imaging device 8 (in a left diagram in FIG. 7) and the back-facing object 10 in the third orientation as viewed from the imaging device 8 (in a right diagram in FIG. 7). In this example, as illustrated in FIG. 7, the front-facing object 10 in the second orientation as viewed from the imaging device 8 and the back-facing object 10 in the third orientation as viewed from the imaging device 8 are similar to each other particularly in their external outlines. In other words, the view of the front-facing object 10 in the second orientation is similar to the view of the back-facing object 10 in the third orientation. Thus, the second estimated orientation resulting from the back surface process using the view of the front-facing object 10 in the second orientation is close to the third orientation of the back-facing object 10.

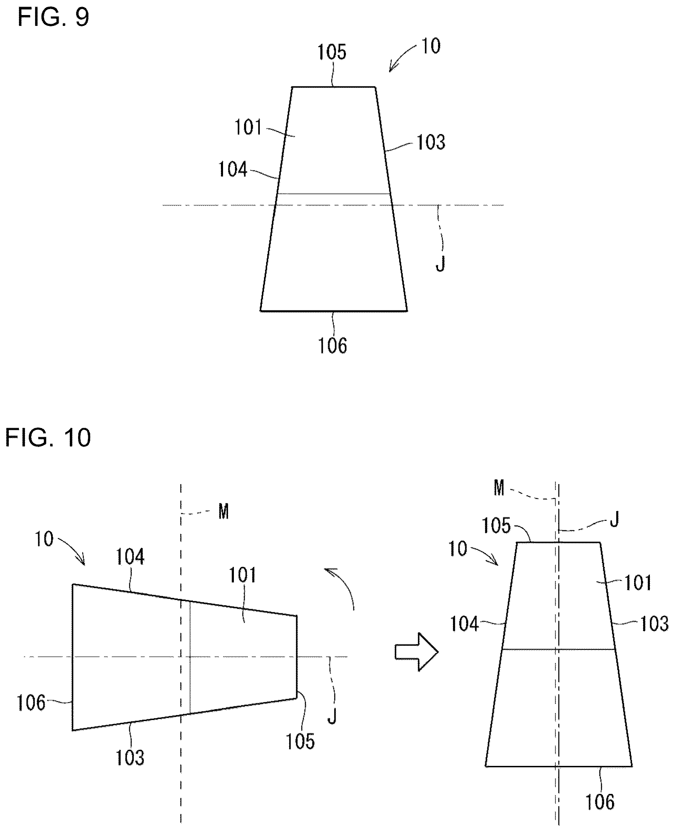

For example, the second captured image may include the back-facing object 10 in the second orientation (refer to FIG. 6). In this case, the second estimated orientation resulting from the back surface process is close to the actual orientation of the object 10 (specifically, the second orientation of the back-facing object 10) as viewed from the imaging device 8. In contrast, the second estimated orientation resulting from the front surface process differs greatly from the actual orientation of the object 10 as viewed from the imaging device 8. FIG. 8 is a schematic diagram of the front-facing object 10 in the third orientation as viewed from the imaging device 8 (in a left diagram in FIG. 8) and the back-facing object 10 in the second orientation as viewed from the imaging device 8 (in a right diagram in FIG. 8). In this example, as illustrated in FIG. 9, the back-facing object 10 in the second orientation as viewed from the imaging device 8 and the front-facing object 10 in the third orientation as viewed from the imaging device 8 are similar to each other particularly in their external outlines. In other words, the view of the back-facing object 10 in the second orientation is similar to the view of the front-facing object 10 in the third orientation. Thus, the second estimated orientation resulting from the front surface process using the view of the back-facing object 10 in the second orientation is close to the third orientation of the front-facing object 10.

After the second estimated orientation resulting from the front surface process and the second estimated orientation resulting from the back surface process are determined in step s6, in step s7, the identifier 21 determines multiple first rotated estimated orientations by rotating the multiple first estimated orientations obtained in step s3 in the same manner as or in a similar manner to when the orientation of the object 10 is rotated from the first orientation to the second orientation. In this example, the identifier 21 determines a first rotated estimated orientation (also referred to as a first rotated estimated orientation resulting from the front surface process) by rotating, in the same manner as or a similar manner to when the orientation of the object 10 is rotated from the first orientation to the second orientation, the first estimated orientation resulting from the front surface process. The identifier 21 also determines a first rotated estimated orientation (also referred to as a first rotated estimated orientation resulting from the back surface process) by rotating, in the same manner as or a similar manner to when the orientation of the object 10 is rotated from the first orientation to the second orientation, the first estimated orientation resulting from the back surface process. The identifier 21 uses, as the first rotated estimated orientation resulting from the front surface process, an orientation obtained by rotating the first estimated orientation resulting from the front surface process about the rotation axis J by the angle +W in the imaging device coordinate system. The identifier 21 uses, as the first rotated estimated orientation resulting from the back surface process, an orientation obtained by rotating the first estimated orientation resulting from the back surface process about the rotation axis J by the angle +W in the imaging device coordinate system.

For example, the first captured image may include the front-facing object 10 in the first orientation. In this case, the first estimated orientation resulting from the front surface process is close to the first orientation of the front-facing object 10 as described above. Thus, the first rotated estimated orientation obtained by rotating, in the same manner as or a similar manner to when the orientation of the object 10 is rotated from the first orientation to the second orientation, the first estimated orientation resulting from the front surface process, or specifically, the first rotated estimated orientation resulting from the front surface process, is close to the second orientation of the front-facing object 10. As described above, the second estimated orientation resulting from the front surface process is close to the second orientation of the front-facing object 10. Thus, the first rotated estimated orientation resulting from the front surface process is close to the second estimated orientation resulting from the front surface process. The first estimated orientation resulting from the back surface process is close to the first orientation of the back-facing object 10. Thus, the first rotated estimated orientation obtained by rotating, in the same manner as or a similar manner to when the orientation of the object 10 is rotated from the first orientation to the second orientation, the first estimated orientation resulting from the back surface process, or specifically, the first rotated estimated orientation resulting from the back surface process, is close to the second orientation of the back-facing object 10 (in the right diagram in FIG. 6). The second estimated orientation resulting from the back surface process is close to the third orientation of the back-facing object 10 (in the right diagram in FIG. 7). Thus, the first rotated estimated orientation resulting from the back surface process differs greatly from the second estimated orientation resulting from the back surface process.

For example, the first captured image may include the back-facing object 10 in the first orientation. In this case, the first estimated orientation resulting from the back surface process is close to the first orientation of the back-facing object 10 as described above. Thus, the first rotated estimated orientation obtained by rotating, in the same manner as or a similar manner to when the orientation of the object 10 is rotated from the first orientation to the second orientation, the first estimated orientation resulting from the back surface process, or specifically, the first rotated estimated orientation resulting from the back surface process, is close to the second orientation of the back-facing object 10. The second estimated orientation resulting from the back surface process is close to the second orientation of the back-facing object 10. Thus, the first rotated estimated orientation resulting from the back surface process is close to the second estimated orientation resulting from the back surface process. The first estimated orientation resulting from the front surface process is close to the first orientation of the front-facing object 10. Thus, the first rotated estimated orientation obtained by rotating, in the same manner as or a similar manner to when the orientation of the object 10 is rotated from the first orientation to the second orientation, the first estimated orientation resulting from the front surface process, or specifically, the first rotated estimated orientation resulting from the front surface process, is close to the second orientation of the front-facing object 10 (in the right diagram in FIG. 5). The second estimated orientation resulting from the front surface process is close to the third orientation of the front-facing object 10 (in the left diagram in FIG. 8). Thus, the first rotated estimated orientation resulting from the front surface process differs greatly from the second estimated orientation resulting from the front surface process.

As described above, when the generated first captured image includes the front-facing object 10 in the first orientation, the first rotated estimated orientation resulting from the front surface process is close to the second estimated orientation resulting from the front surface process. In contrast, the first rotated estimated orientation resulting from the back surface process differs greatly from the second estimated orientation resulting from the back surface process.

When the generated first captured image includes the back-facing object 10 in the first orientation, the first rotated estimated orientation resulting from the back surface process is close to the second estimated orientation resulting from the back surface process. In contrast, the first rotated estimated orientation resulting from the front surface process differs greatly from the second estimated orientation resulting from the front surface process.

In step s8 subsequent to step s7, the identifier 21 performs a first comparison process to compare, for each corresponding specific surface, the multiple first rotated estimated orientations obtained in step s7 with the multiple second estimated orientations obtained in step s6. In this example, the identifier 21 performs the first comparison process to compare, for each corresponding specific surface, the first rotated estimated orientation resulting from the front surface process and the first rotated estimated orientation resulting from the back surface process with the second estimated orientation resulting from the front surface process and the second estimated orientation resulting from the back surface process. The first rotated estimated orientation resulting from the front surface process and the second estimated orientation resulting from the front surface process correspond to the front surface 101. Thus, the first rotated estimated orientation resulting from the front surface process and the second estimated orientation resulting from the front surface process are compared in the first comparison process. The first rotated estimated orientation resulting from the back surface process and the second estimated orientation resulting from the back surface process correspond to the back surface 102. Thus, the first rotated estimated orientation resulting from the back surface process and the second estimated orientation resulting from the back surface process are compared in the first comparison process.

In the first comparison process, for example, the identifier 21 calculates, for each of the first rotated estimated orientations, an evaluation value (also referred to as a first similarity evaluation value) indicating a degree of similarity between the first rotated estimated orientation and the second estimated orientation corresponding to the specific surface to which the first rotated estimated orientation corresponds. In this manner, the first comparison process yields multiple first similarity evaluation values corresponding to the respective specific surfaces. A first similarity evaluation value indicating the degree of similarity between the first rotated estimated orientation corresponding to a specific surface and the second estimated orientation corresponding to the specific surface serves as the first similarity evaluation value corresponding to the specific surface.

In this example, the identifier 21 calculates, in the first comparison process, a first similarity evaluation value (also referred to as a first similarity evaluation value resulting from the front surface process) indicating the degree of similarity between the first rotated estimated orientation resulting from the front surface process and the second estimated orientation resulting from the front surface process. The identifier 21 also determines, in the first comparison process, a first similarity evaluation value (also referred to as a first similarity evaluation value resulting from the back surface process) indicating the degree of similarity between the first rotated estimated orientation resulting from the back surface process and the second estimated orientation resulting from the back surface process. The first similarity evaluation value resulting from the front surface process and the first similarity evaluation value resulting from the back surface process are the results of the first comparison process. An example method for calculating the first similarity evaluation values will be described below.

For example, the orientation of the object 10 in the imaging device coordinate system is represented by a rotation (αn, βn, γn) relative to a reference orientation (n is a variable), where an is a rotation angle about an x-axis of the imaging device coordinate system (also referred to as a roll angle), βn is a rotation angle about a y-axis of the imaging device coordinate system (also referred to as a pitch angle), and γn is a rotation angle about a z-axis of the imaging device coordinate system (also referred to as a yaw angle). For example, the first rotated estimated orientation resulting from the front surface process may be represented by a rotation (α11, β11, γ11). The second estimated orientation resulting from the front surface process may be represented by a rotation (α12, β12, γ12). For example, the first rotated estimated orientation resulting from the back surface process may be represented by a rotation (α21, β21, γ21). The second estimated orientation resulting from the back surface process may be represented by a rotation (α22, β22, γ22). A vector using the origin as a starting point may be represented by (x, y, z) in the imaging device coordinate system, where x indicates a position on the x-axis of the imaging device coordinate system, y indicates a position on the y-axis of the imaging device coordinate system, and z indicates a position on the z-axis of the imaging device coordinate system.

The identifier 21 may use a vector T (0, 0, 1) in the imaging device coordinate system. To determine the first similarity evaluation value resulting from the front surface process, the identifier 21 first rotates the vector T about the x-axis by α11, then about the y-axis by β11, and finally about the z-axis by γ11. The identifier 21 defines the vector resulting from these rotations as a vector T11. The identifier 21 also rotates the vector T about the x-axis by α12 first, then about the y-axis by β12, and finally about the z-axis by γ12. The identifier 21 defines the vector resulting from these rotations as a vector T12. The identifier 21 then calculates the Euclidean distance between the end point of the vector T11 and the end point of the vector T12 and uses the calculated Euclidean distance as the first similarity evaluation value resulting from the front surface process. In this example, a less first similarity evaluation value resulting from the front surface process indicates a higher degree of similarity between the first rotated estimated orientation resulting from the front surface process and the second estimated orientation resulting from the front surface process.

In the same or a similar manner, to determine the first similarity evaluation value resulting from the back surface process, the identifier 21 first rotates the vector T about the x-axis by α21, then about the y-axis by β21, and finally about the z-axis by γ21. The identifier 21 defines the vector resulting from these rotations as a vector T21. The identifier 21 also rotates the vector T about the x-axis by α22 first, then about the y-axis by β22, and finally about the z-axis by γ22. The identifier 21 defines the vector resulting from these rotations as a vector T22. The identifier 21 then calculates the Euclidean distance between the end point of the vector T21 and the end point of the vector T22 and uses the calculated Euclidean distance as the first similarity evaluation value resulting from the back surface process. In this example, a less first similarity evaluation value resulting from the back surface process indicates a higher degree of similarity between the first rotated estimated orientation resulting from the back surface process and the second estimated orientation resulting from the back surface process.

In step s9 subsequent to step s8, based on the results of the first comparison process in step s8, the identifier 21 identifies, as the target surface among the multiple specific surfaces of the object 10, the specific surface facing the imaging device 8 when the imaging device 8 generates the first captured image of the object 10 in the first orientation. In other words, based on the results of the first comparison process, the identifier 21 identifies, as the target surface, the specific surface facing the imaging device 8 when the object 10 in the first orientation is imaged by the imaging device 8. In step s9, the identifier 21 identifies, for example, the minimum first similarity evaluation value of the multiple first similarity evaluation values obtained as the results of the first comparison process. The identifier 21 then identifies, as the target surface, the specific surface corresponding to the identified minimum first similarity evaluation value.

In this example, the identifier 21 identifies, of the front surface 101 and the back surface 102, the surface facing the imaging device 8 when the first captured image is generated by the imaging device 8 (specifically, in step s2) based on the results of the first comparison process that are the first similarity evaluation value resulting from the front surface process and the first similarity evaluation value resulting from the back surface process. When, for example, the first similarity evaluation value resulting from the front surface process is less than the first similarity evaluation value resulting from the back surface process, the identifier 21 determines that the specific surface corresponding to the first similarity evaluation value resulting from the front surface process, or specifically, the front surface 101, is the surface facing the imaging device 8 in step s2. In other words, the identifier 21 determines that the object 10 is front-facing in step s2 when the first similarity evaluation value resulting from the front surface process is less than the first similarity evaluation value resulting from the back surface process. When, for example, the first similarity evaluation value resulting from the back surface process is less than the first similarity evaluation value resulting from the front surface process, the identifier 21 identifies, as the surface facing the imaging device 8 in step s2, the specific surface corresponding to the first similarity evaluation value resulting from the back surface process, or specifically, the back surface 102. In other words, the identifier 21 determines that the object 10 is back-facing in step s2 when the first similarity evaluation value resulting from the back surface process is less than the first similarity evaluation value resulting from the front surface process. Note that the identifier 21 may determine either the front surface 101 or the back surface 102 as the target surface when the first similarity evaluation value resulting from the front surface process is equal to the first similarity evaluation value resulting from the back surface process.

As described above, when the generated first captured image includes the front-facing object 10 in the first orientation, the first rotated estimated orientation resulting from the front surface process is close to the second estimated orientation resulting from the front surface process. In contrast, the first rotated estimated orientation resulting from the back surface process differs greatly from the second estimated orientation resulting from the back surface process. Thus, when the first captured image is generated with the front surface 101 facing the imaging device 8, the first similarity evaluation value resulting from the front surface process is less whereas the first similarity evaluation value resulting from the back surface process is greater. Thus, when the first captured image is generated with the front surface 101 facing the imaging device 8, the first similarity evaluation value resulting from the front surface process is more likely to be less than the first similarity evaluation value resulting from the back surface process. Thus, when the first similarity evaluation value resulting from the front surface process is less than the first similarity evaluation value resulting from the back surface process, the surface facing the imaging device 8 is determined to be the front surface 101. This allows the surface facing the imaging device 8 when the first captured image is generated to be identified accurately.

As described above, when the generated first captured image includes the back-facing object 10 in the first orientation, the first rotated estimated orientation resulting from the back surface process is close to the second estimated orientation resulting from the back surface process. In contrast, the first rotated estimated orientation resulting from the front surface process differs greatly from the second estimated orientation resulting from the front surface process. Thus, when the first captured image is generated with the back surface 102 facing the imaging device 8, the first similarity evaluation value resulting from the back surface process is less whereas the first similarity evaluation value resulting from the front surface process is greater. Thus, when the first captured image is generated with the back surface 102 facing the imaging device 8, the first similarity evaluation value resulting from the back surface process is more likely to be less than the first similarity evaluation value resulting from the front surface process. Thus, when the first similarity evaluation value resulting from the back surface process is less than the first similarity evaluation value resulting from the front surface process, the surface facing the imaging device 8 is determined to be the back surface 102. This allows the surface facing the imaging device 8 when the first captured image is generated to be identified accurately.

Once the controller 2 identifies the target surface, the controller 2 determines that the surface opposite the identified target surface is held by the robot 9. For example, when the target surface is the front surface 101, the controller 2 determines that the back surface 102 is held by the robot 9. When the target surface is the back surface 102, the controller 2 determines that the front surface 101 is held by the robot 9. The controller 2, which can control the robot 9 through the interface 5, may change the task of the robot 9 based on the surface of the object 10 held by the robot 9. For example, the controller 2 may cause the robot 9 holding the front surface 101 to perform a specific task and the robot 9 holding the back surface 102 to perform another task different from the specific task.

Note that the direction in which the rotation axis J extends is not limited to the above example. For example, the rotation axis J may be defined in a direction slightly oblique to the direction parallel to the vertical direction of the object 10 when the object 10 in the first orientation and the rotation axis J are viewed from the imaging device 8. The rotation axis J may be defined to pass through a position slightly shifted from the center of the object 10 in the lateral direction of the object 10 when the object 10 in the first orientation and the rotation axis J are viewed from the imaging device 8. The rotation axis J may be defined not to pass through the object 10.

In one or more embodiments of the present disclosure, as indicated above, the accuracy of identifying the target surface, or specifically, the surface facing the imaging device 8, can be improved by causing the appearance of the front-facing object 10 in the second orientation as viewed from the imaging device 8 (in the right diagram in FIG. 5) to look greatly different from the appearance of the back-facing object 10 in the second orientation as viewed from the imaging device 8 (in the right diagram in FIG. 6). The front-facing object 10 in the second orientation is obtained by rotating the back-facing object 10 in the first orientation by the angle +W. The back-facing object 10 in the second orientation is obtained by rotating the front-facing object 10 in the first orientation by the angle +W. In other words, the accuracy of identifying the target surface can be improved by causing the second orientation of the front-facing object 10 to differ greatly from the second orientation of the back-facing object 10. In still other words, the accuracy of identifying the target surface can be improved by causing the appearance of the object 10 (in the right diagram in FIG. 5) in the second captured image when the first captured image is generated with the front surface 101 facing the imaging device 8 to differ greatly from the appearance of the object 10 (in the right diagram in FIG. 6) in the second captured image when the first captured image is generated with the back surface 102 facing the imaging device 8. When the rotation axis J is defined as in the examples in FIGs. 5 and 6, the second orientation of the front-facing object 10 differs greatly from the second orientation of the back-facing object 10, thus improving the accuracy of identifying the target surface.

When the rotation axis J is defined to extend, for example, parallel to the lateral direction of the object 10 when the object 10 and the rotation axis J are viewed from the imaging device 8 as illustrated in FIG. 9, the second orientation of the front-facing object 10 differs by a lesser degree from the second orientation of the back-facing object 10. In this case, the target surface is identified less easily than when the rotation axis J is defined as in the examples in FIGs. 5 and 6.

In this example, the robot 9 moves the arm 90 to rotate the object 10. When the robot 9 holds the object 10 to position the object 10 in front of the imaging device 8, the rotation axis J about which the object 10 is to be rotated may not be aligned with a rotation axis M about which the object 10 can be rotated simply with the movement of the arm 90, as illustrated in a left diagram in FIG. 10. In this case, the robot 9 may rotate, before step s2, the entire end effector 91 or a distal end of the end effector 91 holding the object 10 relative to the arm 90 to align the rotation axis J with the rotation axis M as illustrated in a right diagram in FIG. 10. This operation of the robot 9 is implemented by the controller 2 in the processing device 1 controlling the robot 9. The controller 2 causes the imaging device 8 to capture an image of the object 10 between steps s1 and s2. The controller 2 then identifies the rotation of the object 10 about the optical axis of the imaging device 8 based on the captured image generated by the imaging device 8. The controller 2 controls the robot 9 based on the identification result to rotate the entire end effector 91 or the distal end of the end effector 91 relative to the arm 90 to align the rotation axis J with the rotation axis M.

In this example, as described above, the specific surface, among the multiple specific surfaces of the object 10, facing the imaging device 8 when the first captured image is generated by the imaging device 8 is identified based on multiple first estimation results and multiple second estimation results. The multiple first estimation results are estimated through the respective multiple types of orientation estimation processes performed based on the first captured image of the object 10 in the first orientation. The multiple second estimation results are estimated through the respective multiple types of orientation estimation processes performed based on the second captured image of the object 10 in the second orientation rotated from the first orientation. Thus, when the appearance of the object 10 in the second captured image varies greatly depending on the specific surface facing the imaging device 8 when the first captured image is generated, the specific surface facing the imaging device 8 when the first captured image is generated can be identified accurately.

After identifying the target surface, the identifier 21 may determine, of the multiple first estimated orientations obtained in step s3, the first estimated orientation corresponding to the identified target surface as a final estimation result about the orientation of the object 10 when the first captured image is generated by the imaging device 8 (specifically, the object 10 in the first orientation). For example, the identifier 21 identifying the front surface 101 as the target surface may determine the first estimated orientation resulting from the front surface process as the final estimation result about the orientation of the object 10 when the first captured image is generated. The identifier 21 identifying the back surface 102 as the target surface may determine the first estimated orientation resulting from the back surface process as the final estimation result about the orientation of the object 10 when the first captured image is generated.

After identifying the target surface, the identifier 21 may determine, of the multiple second estimated orientations obtained in step s6, the second estimated orientation corresponding to the identified target surface as a final estimation result about the orientation of the object 10 when the second captured image is generated by the imaging device 8 (specifically, the object 10 in the second orientation). For example, the identifier 21 identifying the front surface 101 as the target surface may determine the second estimated orientation resulting from the front surface process as the final estimation result about the orientation of the object 10 when the second captured image is generated. The identifier 21 identifying the back surface 102 as the target surface may determine the second estimated orientation resulting from the back surface process as the final estimation result about the orientation of the object 10 when the second captured image is generated.

After identifying the target surface, the identifier 21 may determine, of the multiple first rotated estimated orientations obtained in step s7, the first rotated estimated orientation corresponding to the identified target surface as the final estimation result about the orientation of the object 10 when the second captured image is generated by the imaging device 8 (specifically, the object 10 in the second orientation). For example, the identifier 21 identifying the front surface 101 as the target surface may determine the first rotated estimated orientation resulting from the front surface process as the final estimation result about the orientation of the object 10 when the second captured image is generated. The identifier 21 identifying the back surface 102 as the target surface may determine the first rotated estimated orientation resulting from the back surface process as the final estimation result about the orientation of the object 10 when the second captured image is generated. Other Examples of Target Surface Identification Process

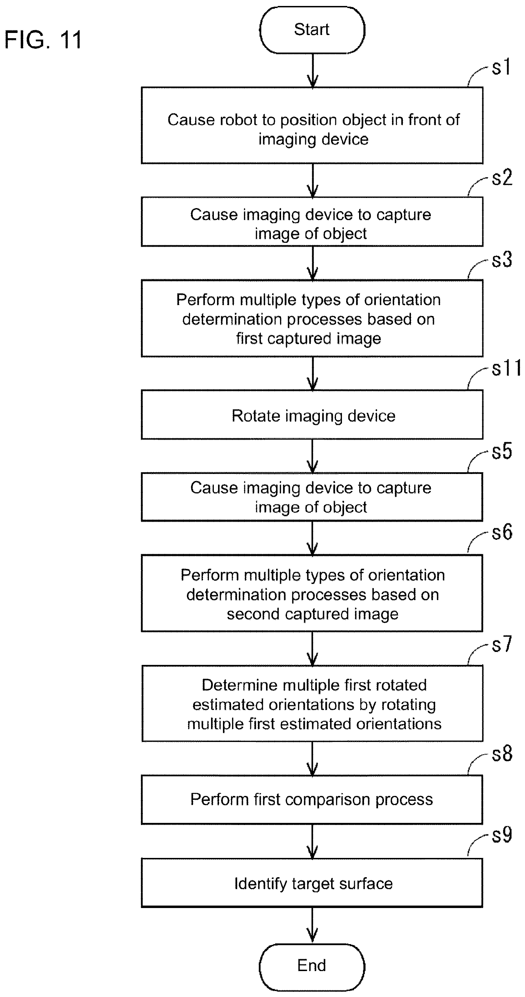

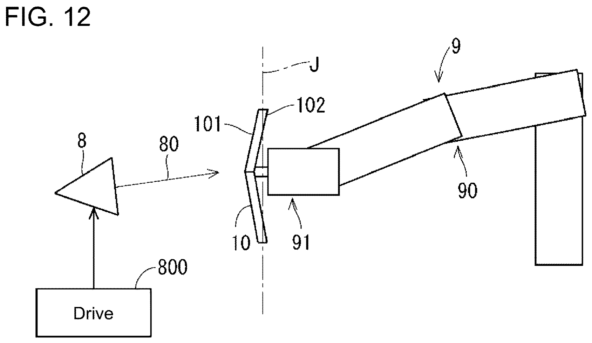

In the above example, the object 10 is rotated to change its orientation when the imaging device 8 captures images of the object 10 to generate the first captured image and the second captured image. The imaging device 8 capturing images of the object 10 may instead be rotated to change the orientation of the imaging device 8 to generate the first captured image and the second captured image. FIG. 11 is a flowchart showing an example of a target surface identification process in such a case. To perform the target surface identification process shown in FIG. 11, a drive 800 rotates the imaging device 8 as shown in FIG. 12.

The drive 800 can rotate the imaging device 8 about the rotation axis J. The drive 800 may be, for example, a robot that is the same as or similar to the robot 9. The drive 800 is controlled by the controller 2 in the processing device 1. The processing device 1 includes an interface that can communicate with the drive 800. The controller 2 controls the drive 800 through the interface to cause the drive 800 to rotate the imaging device 8 about the rotation axis J.

In the target surface identification process shown in FIG. 11, steps s1, s2, and s3 described above are first performed. In step s11, the controller 2 causes the drive 800 to rotate the imaging device 8. In step s11, the drive 800 rotates the imaging device 8 about the rotation axis J by the angle -W. Step s5 described above is then performed to cause the imaging device 8 to capture an image of the object 10. In step s5, the second captured image of the object 10 in the second orientation rotated from the first orientation is generated as in the above example. Steps s6, s7, s8, and s9 described above are then performed sequentially.

As described above, when the imaging device 8 is rotated to change its orientation to capture an image of the object 10 to generate the first captured image and the second captured image, the controller 2 can also accurately identify the specific surface facing the imaging device 8 when the first captured image is generated.

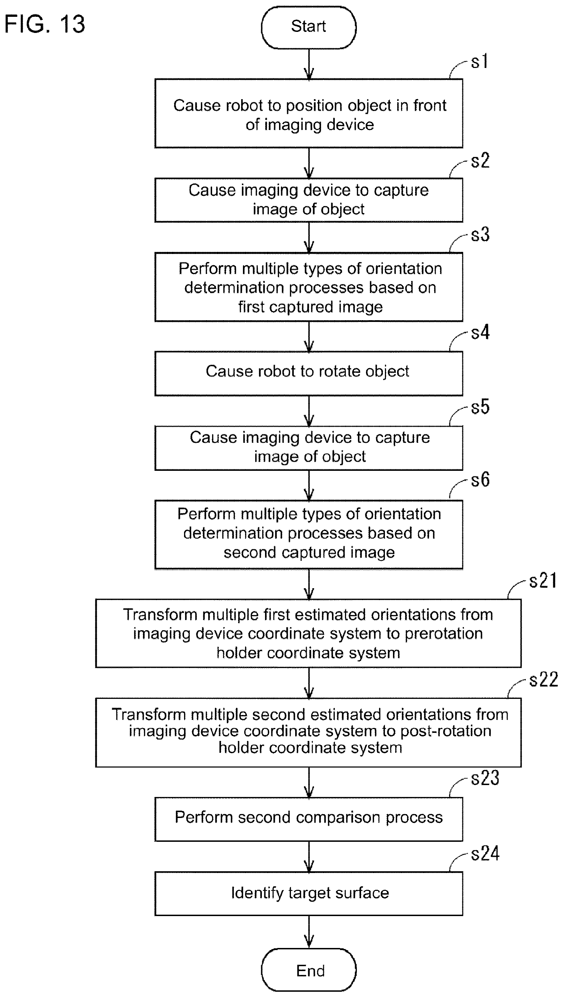

FIG. 13 is a flowchart showing another example of the target surface identification process. In the target surface identification process shown in FIG. 13, steps s1, s2, s3, s4, s5, and s6 described above are performed. After step s6, step s21 is performed.

The end effector 91 as a holder holding the object 10 has a 3D orthogonal coordinate system. This 3D orthogonal coordinate system is referred to as a holder coordinate system. The holder coordinate system represents a real space viewed from the end effector 91 as a coordinate space based on the position of the distal end of the arm 90. In step s4, as described above, the end effector 91 holding the object 10 rotates about the rotation axis J by the angle +W in response to movement of the arm 90. This rotates the object 10 about the rotation axis J by the angle +W. The end effector 91 rotating about the rotation axis J by the angle +W can change the orientation of the object 10 from the first orientation to the second orientation. The holder coordinate system of the end effector 91 holding the object 10 in the second orientation is obtained by rotating the holder coordinate system of the end effector 91 holding the object 10 in the first orientation about the rotation axis J by the angle +W. In other words, the holder coordinate system when the second captured image is generated is obtained by rotating the holder coordinate system when the first captured image is generated about the rotation axis J by the angle +W. The holder coordinate system of the end effector 91 holding the object 10 in the first orientation is hereafter referred to as a pre-rotation holder coordinate system. The holder coordinate system of the end effector 91 holding the object 10 in the second orientation is hereafter referred to as a post-rotation holder coordinate system.

In step s21, the identifier 21 transforms the multiple first estimated orientations obtained in step s3 from the imaging device coordinate system to the pre-rotation holder coordinate system to obtain multiple first transformed estimated orientations. In this example, in step s21, the identifier 21 transforms the first estimated orientation resulting from the front surface process from the imaging device coordinate system to the pre-rotation holder coordinate system to obtain a first transformed estimated orientation resulting from the front surface process. The identifier 21 also transforms the first estimated orientation resulting from the back surface process from the imaging device coordinate system to the pre-rotation holder coordinate system to obtain a first transformed estimated orientation resulting from the back surface process. The first estimated orientations are transformed from the imaging device coordinate system to the pre-rotation holder coordinate system by transforming the first estimated orientations from the estimated orientations of the object 10 in the first orientation as viewed from the imaging device 8 to the estimated orientations of the object 10 in the first orientation as viewed from the end effector 91 holding the object 10 in the first orientation. The first transformed estimated orientations can thus be the estimated orientations of the object 10 in the first orientation as viewed from the end effector 91 holding the object 10 in the first orientation.

In step s22 subsequent to step s21, the identifier 21 transforms the multiple second estimated orientations obtained in step s6 from the imaging device coordinate system to the post-rotation holder coordinate system to obtain multiple second transformed estimated orientations. In this example, in step s22, the identifier 21 transforms the second estimated orientation resulting from the front surface process from the imaging device coordinate system to the post-rotation holder coordinate system to obtain a second transformed estimated orientation resulting from the front surface process. The identifier 21 also transforms the second estimated orientation resulting from the back surface process from the imaging device coordinate system to the post-rotation holder coordinate system to obtain a second transformed estimated orientation resulting from the back surface process. The second estimated orientations are transformed from the imaging device coordinate system to the post-rotation holder coordinate system by transforming the second estimated orientations from the estimated orientations of the object 10 in the second orientation as viewed from the imaging device 8 to the estimated orientations of the object 10 in the second orientation as viewed from the end effector 91 holding the object 10 in the second orientation. The second transformed estimated orientations can thus be the estimated orientations of the object 10 in the second orientation as viewed from the end effector 91 holding the object 10 in the second orientation.

For example, the first captured image includes the front-facing object 10 in the first orientation. In this case, as described above, the first estimated orientation resulting from the front surface process is close to the actual orientation of the object 10 as viewed from the imaging device 8. The second estimated orientation resulting from the front surface process is close to the actual orientation of the object 10 as viewed from the imaging device 8. The end effector 91 rotates together with the object 10. Thus, the actual view of the object 10 in the first orientation as viewed from the end effector 91 holding the object 10 in the first orientation is the same as the actual view of the object 10 in the second orientation as viewed from the end effector 91 holding the object 10 in the second orientation. Thus, the first transformed estimated orientation resulting from the front surface process, obtained based on the first estimated orientation resulting from the front surface process close to the actual orientation of the object 10, is close to the second transformed estimated orientation resulting from the front surface process, obtained based on the second estimated orientation resulting from the front surface process close to the actual orientation of the object 10.

When the first captured image includes the front-facing object 10 in the first orientation, the first estimated orientation resulting from the back surface process is close to the orientation of the back-facing object 10 in the first orientation as viewed from the imaging device 8. The end effector 91 rotates together with the object 10. Thus, when the second estimated orientation resulting from the back surface process is close to the orientation of the back-facing object 10 in the orientation rotated from the first orientation by the angle +W as viewed from the imaging device 8, or specifically, close to the second orientation of the back-facing object 10 (right in FIG. 6), the first transformed estimated orientation resulting from the back surface process is close to the second transformed estimated orientation resulting from the back surface process, as in the relationship between the first transformed estimated orientation resulting from the front surface process and the second transformed estimated orientation resulting from the front surface process. However, the second estimated orientation resulting from the back surface process is close to the third orientation of the back-facing object 10, as described above. Thus, the first transformed estimated orientation resulting from the back surface process differs greatly from the second transformed estimated orientation resulting from the back surface process.

The same or similar structure applies for the first captured image including the back-facing object 10 in the first orientation. When the first captured image includes the back-facing object 10 in the first orientation, the first transformed estimated orientation resulting from the back surface process is close to the second transformed estimated orientation resulting from the back surface process. In contrast, the first transformed estimated orientation resulting from the front surface process differs greatly from the second transformed estimated orientation resulting from the front surface process.

In step s23 subsequent to step s22, the identifier 21 performs a second comparison process to compare the multiple first transformed estimated orientations obtained in step s21 with the multiple second transformed estimated orientations obtained in step s22 for each corresponding surface. In this example, the identifier 21 performs the second comparison process to compare, for each corresponding surface, the first transformed estimated orientation resulting from the front surface process and the first transformed estimated orientation resulting from the back surface process with the second transformed estimated orientation resulting from the front surface process and the second transformed estimated orientation resulting from the back surface process. The first transformed estimated orientation resulting from the front surface process and the second transformed estimated orientation resulting from the front surface process both correspond to the front surface 101. Thus, the second comparison process compares the first transformed estimated orientation resulting from the front surface process with the second transformed estimated orientation resulting from the front surface process. The first transformed estimated orientation resulting from the back surface process and the second transformed estimated orientation resulting from the back surface process both correspond to the back surface 102. Thus, the second comparison process compares the first transformed estimated orientation resulting from the back surface process with the second transformed estimated orientation resulting from the back surface process.

In the second comparison process, for example, the identifier 21 calculates, for each of the first transformed estimated orientations, an evaluation value (also referred to as a second similarity evaluation value) indicating the degree of similarity between the first transformed estimated orientation and the second transformed estimated orientation corresponding to the specific surface to which the first transformed estimated orientation corresponds. In this manner, the second comparison process yields multiple second similarity evaluation values corresponding to the respective specific surfaces. A second similarity evaluation value indicating the degree of similarity between the first transformed estimated orientation corresponding to a specific surface and the second transformed estimated orientation corresponding to the specific surface serves as the second similarity evaluation value corresponding to the specific surface.

In the second comparison process, the identifier 21 determines, for example, a second similarity evaluation value (also referred to as a second similarity evaluation value resulting from the front surface process) indicating the degree of similarity between the first transformed estimated orientation resulting from the front surface process and the second transformed estimated orientation resulting from the front surface process. In the second comparison process, the identifier 21 determines, for example, a second similarity evaluation value (also referred to as a second similarity evaluation value resulting from the back surface process) indicating the degree of similarity between the first transformed estimated orientation resulting from the back surface process and the second transformed estimated orientation resulting from the back surface process. The second similarity evaluation value resulting from the front surface process and the second similarity evaluation value resulting from the back surface process are the results of the second comparison process. The identifier 21 may calculate the second similarity evaluation values in, for example, the same manner as or in a similar manner to when calculating the first similarity evaluation values.

In step s24 subsequent to step s23, based on the results of the second comparison process, the identifier 21 identifies, as the target surface, the specific surface facing the imaging device 8 when the object 10 in the first orientation is imaged by the imaging device 8. In step s23, the identifier 21 identifies, for example, a minimum second similarity evaluation value of the multiple second similarity evaluation values. The identifier 21 then determines that the specific surface corresponding to the identified minimum second similarity evaluation value is the target surface.

In this example, based on the second similarity evaluation value resulting from the front surface process and the second similarity evaluation value resulting from the back surface process, the identifier 21 identifies, of the front surface 101 and the back surface 102, the surface facing the imaging device 8 when the first captured image is generated by the imaging device 8. When, for example, the second similarity evaluation value resulting from the front surface process is less than the second similarity evaluation value resulting from the back surface process, the identifier 21 determines that the front surface 101 faces the imaging device 8 in step s2. When, for example, the second similarity evaluation value resulting from the back surface process is less than the second similarity evaluation value resulting from the front surface process, the identifier 21 determines that the back surface 102 faces the imaging device 8 in step s2. Note that the identifier 21 may determine either the front surface 101 or the back surface 102 as the target surface when the second similarity evaluation value resulting from the front surface process is equal to the second similarity evaluation value resulting from the back surface process.

As described above, when the first captured image includes the front-facing object 10 in the first orientation, the first transformed estimated orientation resulting from the front surface process is close to the second transformed estimated orientation resulting from the front surface process. In contrast, the first transformed estimated orientation resulting from the back surface process differs greatly from the second transformed estimated orientation resulting from the back surface process. Thus, when the first captured image is generated with the front surface 101 facing the imaging device 8, the second similarity evaluation value resulting from the front surface process is lesser whereas the second similarity evaluation value resulting from the back surface process is greater. Thus, when the first captured image is generated with the front surface 101 facing the imaging device 8, the second similarity evaluation value resulting from the front surface process is likely to be less than the second similarity evaluation value resulting from the back surface process. Thus, when the second similarity evaluation value resulting from the front surface process is less than the second similarity evaluation value resulting from the back surface process, the surface facing the imaging device 8 is determined to be the front surface 101. This allows the surface facing the imaging device 8 when the first captured image is generated to be identified accurately.

As described above, when the first captured image includes the back-facing object 10 in the first orientation, the first transformed estimated orientation resulting from the back surface process is close to the second transformed estimated orientation resulting from the back surface process. In contrast, the first transformed estimated orientation resulting from the front surface process differs greatly from the second transformed estimated orientation resulting from the front surface process. Thus, when the first captured image is generated with the back surface 102 facing the imaging device 8, the second similarity evaluation value resulting from the back surface process is less whereas the second similarity evaluation value resulting from the front surface process is greater. Thus, when the first captured image is generated with the back surface 102 facing the imaging device 8, the second similarity evaluation value resulting from the back surface process is likely to be less than the second similarity evaluation value resulting from the front surface process. Thus, when the second similarity evaluation value resulting from the back surface process is less than the second similarity evaluation value resulting from the front surface process, the surface facing the imaging device 8 is determined to be the back surface 102. This allows the surface facing the imaging device 8 when the first captured image is generated to be identified accurately.

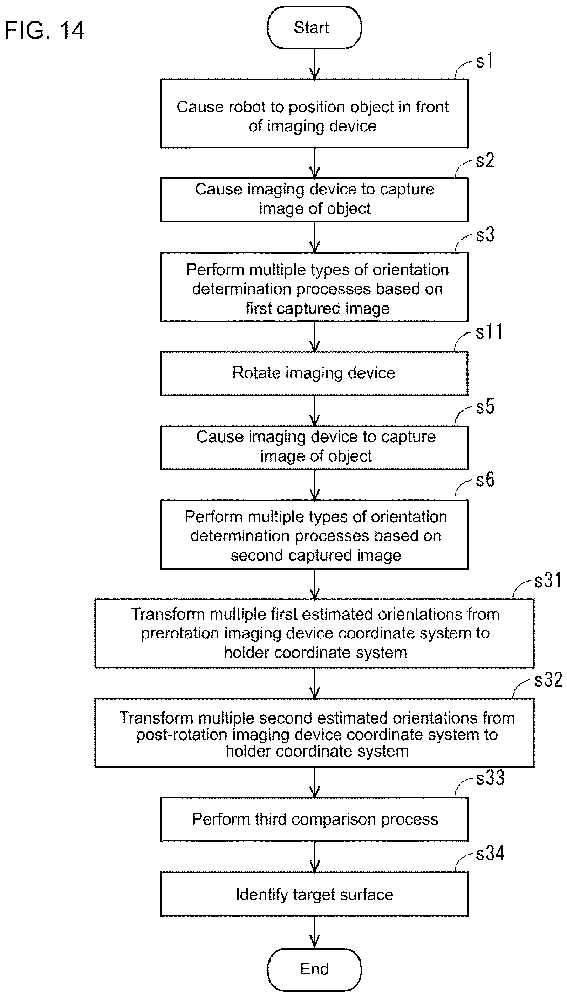

FIG. 14 is a flowchart showing another example of the target surface identification process. In the target surface identification process shown in FIG. 14, steps s1, s2, s3, s11, s5, and s6 described above are performed. After step s6, step s31 is performed.

In step s11, as described above, the imaging device 8 rotates about the rotation axis J by the angle -W. Thus, the imaging device coordinate system of the imaging device 8 when the second captured image is generated is obtained by rotating, about the rotation axis J by the angle -W, the imaging device coordinate system of the imaging device 8 when the first captured image is generated. The imaging device coordinate system of the imaging device 8 when the first captured image is generated is referred to as a pre-rotation imaging device coordinate system. The imaging device coordinate system of the imaging device 8 when the second captured image is generated is referred to as a post-rotation imaging device coordinate system. The multiple first estimated orientations obtained in step s3 are represented in the pre-rotation holder coordinate system. The multiple second estimated orientations obtained in step s6 are represented in the post-rotation holder coordinate system.

In step s31, the identifier 21 transforms the multiple first estimated orientations obtained in step s3 from the pre-rotation imaging device coordinate system to the holder coordinate system to obtain multiple third transformed estimated orientations. In this example, in step s31, the identifier 21 transforms the first estimated orientation resulting from the front surface process from the pre-rotation imaging device coordinate system to the holder coordinate system to obtain a third transformed estimated orientation resulting from the front surface process. The identifier 21 also transforms the first estimated orientation resulting from the back surface process from the pre-rotation imaging device coordinate system to the holder coordinate system to obtain a third transformed estimated orientation resulting from the back surface process. When the orientation of the object 10 held by the robot 9 remains the same in the target surface identification process, the third transformed estimated orientation resulting from the front surface process is the same as the second transformed estimated orientation resulting from the front surface process described above and the third transformed estimated orientation resulting from the back surface process is the same as the second transformed estimated orientation resulting from the back surface process described above.

In step s32 subsequent to step s31, the identifier 21 transforms the multiple second estimated orientations obtained in step s6 from the post-rotation imaging device coordinate system to the holder coordinate system to obtain multiple fourth transformed estimated orientations. In this example, in step s32, the identifier 21 transforms the second estimated orientation resulting from the front surface process from the post-rotation imaging device coordinate system to the holder coordinate system to obtain a fourth transformed estimated orientation resulting from the front surface process. The identifier 21 also transforms the second estimated orientation resulting from the back surface process from the post-rotation imaging device coordinate system to the holder coordinate system to obtain a fourth transformed estimated orientation resulting from the back surface process.

For example, the first captured image may include the front-facing object 10 in the first orientation. In this case, as described above, the first estimated orientation resulting from the front surface process is close to the actual orientation of the object 10 as viewed from the imaging device 8. The second estimated orientation resulting from the front surface process is close to the actual orientation of the object 10 as viewed from the imaging device 8. As in the example in FIG. 13 in which the object 10 rotates together with the end effector 91, the actual view of the object 10 as viewed from the end effector 91 when the first captured image is generated is the same as the actual view of the object 10 as viewed from the end effector 91 when the second captured image is generated, though the imaging device 8 is rotated. Thus, the third transformed estimated orientation resulting from the front surface process, obtained based on the first estimated orientation resulting from the front surface process close to the actual orientation of the object 10, is close to the fourth transformed estimated orientation resulting from the front surface process, obtained based on the second estimated orientation resulting from the front surface process close to the actual orientation of the object 10.

When the first captured image includes the front-facing object 10 in the first orientation, the first estimated orientation resulting from the back surface process is close to the first orientation of the back-facing object 10. When the second estimated orientation resulting from the back surface process is close to the second orientation of the back-facing object 10, the third transformed estimated orientation resulting from the back surface process and the fourth transformed estimated orientation resulting from the back surface process are close to each other, as in the relationship between the third transformed estimated orientation resulting from the front surface process and the fourth transformed estimated orientation resulting from the front surface process. However, the second estimated orientation resulting from the back surface process is close to the third orientation of the back-facing object 10. Thus, the third transformed estimated orientation resulting from the back surface process differs greatly from the fourth transformed estimated orientation resulting from the back surface process.

The same or similar structure applies for the first captured image including the back-facing object 10 in the first orientation. When the first captured image includes the back-facing object 10 in the first orientation, the third transformed estimated orientation resulting from the back surface process is close to the fourth transformed estimated orientation resulting from the back surface process. In contrast, the third transformed estimated orientation resulting from the front surface process differs greatly from the fourth transformed estimated orientation resulting from the front surface process.

In step s33 subsequent to step s32, the identifier 21 performs a third comparison process to compare, for each corresponding surface, the multiple third transformed estimated orientations obtained in step s31 with the multiple fourth transformed estimated orientations obtained in step s32. In this example, the identifier 21 performs the third comparison process to compare, for each corresponding surface, the third transformed estimated orientation resulting from the front surface process and the third transformed estimated orientation resulting from the back surface process with the fourth transformed estimated orientation resulting from the front surface process and the fourth transformed estimated orientation resulting from the back surface process. In the third comparison process, the third transformed estimated orientation resulting from the front surface process is compared with the fourth transformed estimated orientation resulting from the front surface process, and the third transformed estimated orientation resulting from the back surface process is compared with the fourth transformed estimated orientation resulting from the back surface process.

In the third comparison process, for example, the identifier 21 calculates, for each of the third transformed estimated orientations, an evaluation value (also referred to as a third similarity evaluation value) indicating the degree of similarity between the third transformed estimated orientation and the fourth transformed estimated orientation corresponding to the specific surface to which the third transformed estimated orientation corresponds. In this manner, the third comparison process yields multiple third similarity evaluation values corresponding to the respective specific surfaces. A third similarity evaluation value indicating the degree of similarity between the third transformed estimated orientation corresponding to a specific surface and the fourth transformed estimated orientation corresponding to the specific surface serves as the third similarity evaluation value corresponding to the specific surface.

In this example, the identifier 21 calculates, in the third comparison process, a third similarity evaluation value indicating the degree of similarity between the third transformed estimated orientation resulting from the front surface process and the fourth transformed estimated orientation resulting from the front surface process (also referred to as a third similarity evaluation value resulting from the front surface process). In the third comparison process, the identifier 21 also determines, for example, a third similarity evaluation value indicating the degree of similarity between the third transformed estimated orientation resulting from the back surface process and the fourth transformed estimated orientation resulting from the back surface process (also referred to as a third similarity evaluation value resulting from the back surface process). The third similarity evaluation value resulting from the front surface process and the third similarity evaluation value resulting from the back surface process serve as the results of the third comparison process. The identifier 21 may calculate the third similarity evaluation values in, for example, the same manner as or in a similar manner to when calculating the first similarity evaluation values.

In step s34 subsequent to step s33, based on the results of the third comparison, the identifier 21 identifies, as the target surface, the specific surface facing the imaging device 8 when the object 10 in the first orientation is imaged by the imaging device 8. In step s34, the identifier 21 identifies, for example, the minimum third similarity evaluation value of the multiple third similarity evaluation values. The identifier 21 then determines the specific surface corresponding to the identified minimum third similarity evaluation value as the target surface.

In this example, based on the third similarity evaluation value resulting from the front surface process and the third similarity evaluation value resulting from the back surface process, the identifier 21 identifies, of the front surface 101 and the back surface 102, the surface facing the imaging device 8 when the first captured image is generated by the imaging device 8. When, for example, the third similarity evaluation value resulting from the front surface process is less than the third similarity evaluation value resulting from the back surface process, the identifier 21 determines that the front surface 101 faces the imaging device 8 in step s2. When, for example, the third similarity evaluation value resulting from the back surface process is less than the third similarity evaluation value resulting from the front surface process, the identifier 21 determines that the back surface 102 faces the imaging device 8 in step s2. Note that the identifier 21 may determine either the front surface 101 or the back surface 102 as the target surface when the third similarity evaluation value resulting from the front surface process is equal to the third similarity evaluation value resulting from the back surface process.

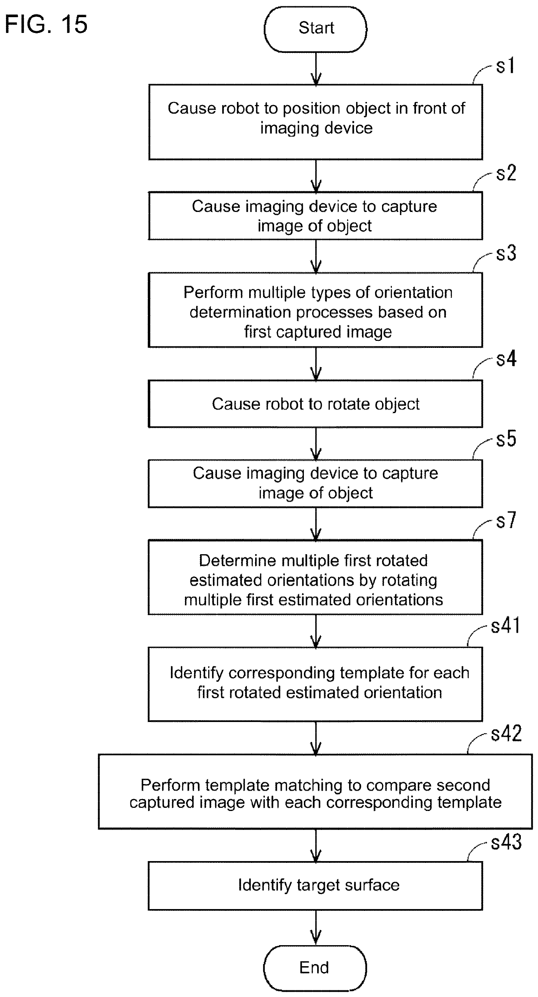

FIG. 15 is a flowchart showing another example of the target surface identification process. In the target surface identification process shown in FIG. 15, steps s1, s2, s3, s4, s5, and s7 described above are performed. After step s7, step s41 is performed.

In step s41, the identifier 21 identifies, for each of the multiple first rotated estimated orientations obtained in step s7, a corresponding template for the first rotated estimated orientation from multiple templates used in the orientation estimation process corresponding to the first rotated estimated orientation among the multiple types of orientation estimation processes. This identifies multiple corresponding templates for the respective first rotated estimated orientations. In this example, the identifier 21 identifies, as a corresponding front surface template, a front surface template associated with the same orientation as the first rotated estimated orientation resulting from the front surface process from multiple front surface templates used in the orientation estimation process for the front surface corresponding to the first rotated estimated orientation resulting from the front surface process. The identifier 21 identifies, as a corresponding back surface template, a back surface template associated with the same orientation as the first rotated estimated orientation resulting from the back surface process from multiple back surface templates used in the orientation estimation process for the back surface corresponding to the first rotated estimated orientation resulting from the back surface process.

In step s42 subsequent to step s41, the identifier 21 performs template matching to compare the second captured image obtained in step s5 with each of the multiple corresponding templates identified in step s41. The identifier 21 determines, for each of the corresponding templates, the matching score between the corresponding template and the second captured image, in the same manner as or in a similar manner to the template matching performed by the estimator 20 in the orientation estimation process. In this manner, multiple matching scores for the respective corresponding templates are determined as the results of the template matching performed in step s42. The matching scores for the corresponding templates are the matching scores between the corresponding templates and the second captured image. In this example, the identifier 21 determines the matching score between the corresponding front surface template and the second captured image and determines the matching score between the corresponding back surface template and the second captured image. The matching score between the corresponding front surface template and the second captured image may hereafter be referred to as a matching score determined with the corresponding front surface template. The matching score between the corresponding back surface template and the second captured image may hereafter be referred to as a matching score determined with the corresponding back surface template.

In step s43 subsequent to step s42, based on the results of the template matching in step s42, the identifier 21 identifies, as the target surface, the specific surface facing the imaging device 8 when the object 10 in the first orientation is imaged by the imaging device 8. In step s43, the identifier 21 identifies, for example, the highest matching score of the multiple matching scores resulting from the template matching. The identifier 21 then determines, as the target surface, the specific surface corresponding to the corresponding template for the identified highest matching score. The specific surface corresponding to a corresponding template is a specific surface corresponding to the orientation estimation process in which the corresponding template is used. For example, the specific surface corresponding to the corresponding front surface template is the front surface 101 corresponding to the orientation estimation process for the front surface in which the corresponding front surface template is used. The specific surface corresponding to the corresponding back surface template is the back surface 102 corresponding to the orientation estimation process for the back surface in which the corresponding back surface template is used.

In this example, based on the matching score determined with the corresponding front surface template and the matching score determined with the corresponding back surface template, the identifier 21 identifies, of the front surface 101 and the back surface 102, the surface facing the imaging device 8 when the first captured image is generated by the imaging device 8. When, for example, the matching score determined with the corresponding front surface template is higher than the matching score determined with the corresponding back surface template, the identifier 21 determines that the front surface 101 faces the imaging device 8 in step s2. When, for example, the matching score determined with the corresponding back surface template is higher than the matching score determined with the corresponding front surface template, the identifier 21 determines that the back surface 102 faces the imaging device 8 in step s2. Note that the identifier 21 may determine either the front surface 101 or the back surface 102 as the target surface when the matching score determined with the corresponding front surface template is equal to the matching score determined with the corresponding back surface template.

For example, the first captured image may include the front-facing object 10 in the first orientation. In this case, as described above, the first estimated orientation resulting from the front surface process is close to the first orientation of the front-facing object 10. The first rotated estimated orientation resulting from the front surface process is thus close to the second orientation of the front-facing object 10. Thus, the corresponding front surface template corresponding to the first rotated estimated orientation resulting from the front surface process is an image similar to the second captured image of the front-facing object 10 in the second orientation. The matching score between the corresponding front surface template and the second captured image is thus higher. In contrast, the first estimated orientation resulting from the back surface process is close to the first orientation of the back-facing object 10. The first rotated estimated orientation resulting from the back surface process is thus close to the second orientation of the back-facing object 10. Thus, the corresponding back surface template corresponding to the first rotated estimated orientation resulting from the back surface process is similar to the captured image of the back-facing object 10 in the second orientation and is dissimilar to the second captured image of the front-facing object 10 in the second orientation. The matching score between the corresponding back surface template and the second captured image is thus lower. Thus, when the first captured image is generated with the front surface 101 facing the imaging device 8, the matching score determined with the corresponding front surface template is more likely to be higher than the matching score determined with the corresponding back surface template.

The first captured image may include the back-facing object 10 in the first orientation. In this case, as described above, the first estimated orientation resulting from the back surface process is close to the first orientation of the back-facing object 10. The first rotated estimated orientation resulting from the back surface process is thus close to the actual second orientation of the back-facing object 10. Thus, the corresponding back surface template corresponding to the first rotated estimated orientation resulting from the back surface process is an image similar to the second captured image of the back-facing object 10 in the second orientation. The matching score between the corresponding back surface template and the second captured image is thus higher. In contrast, the first estimated orientation resulting from the front surface process is close to the first orientation of the front-facing object 10. The first rotated estimated orientation resulting from the front surface process is thus close to the second orientation of the front-facing object 10. Thus, the corresponding front surface template corresponding to the first rotated estimated orientation resulting from the front surface process is similar to the captured image of the front-facing object 10 in the second orientation and dissimilar to the second captured image of the back-facing object 10 in the second orientation. The matching score between the corresponding front surface template and the second captured image is thus lower. Thus, when the back surface 102 faces the imaging device 8 when the first captured image is generated, the matching score determined with the corresponding back surface template is more likely to be higher than the matching score determined with the corresponding front surface template.

In this example, as described above, the appearance of the object 10 in the second captured image varies greatly depending on whether the specific surface facing the imaging device 8 when the first captured image is generated is the front surface 101 or the back surface 102. Thus, the matching score determined with the corresponding front surface template is more likely to be higher than the matching score determined with the corresponding back surface template when the first captured image is generated with the front surface 101 facing the imaging device 8. The matching score determined with the corresponding back surface template is more likely to be higher than the matching score determined with the corresponding front surface template when the first captured image is generated with the back surface 102 facing the imaging device 8. Thus, when the matching score determined with the corresponding front surface template is higher than the matching score determined with the corresponding back surface template, the surface facing the imaging device 8 is determined to be the front surface 101. When the matching score determined with the corresponding back surface template is higher than the matching score determined with the corresponding front surface template, the surface facing the imaging device 8 is determined to be the back surface 102. This allows the surface facing the imaging device 8 when the first captured image is generated to be identified accurately.

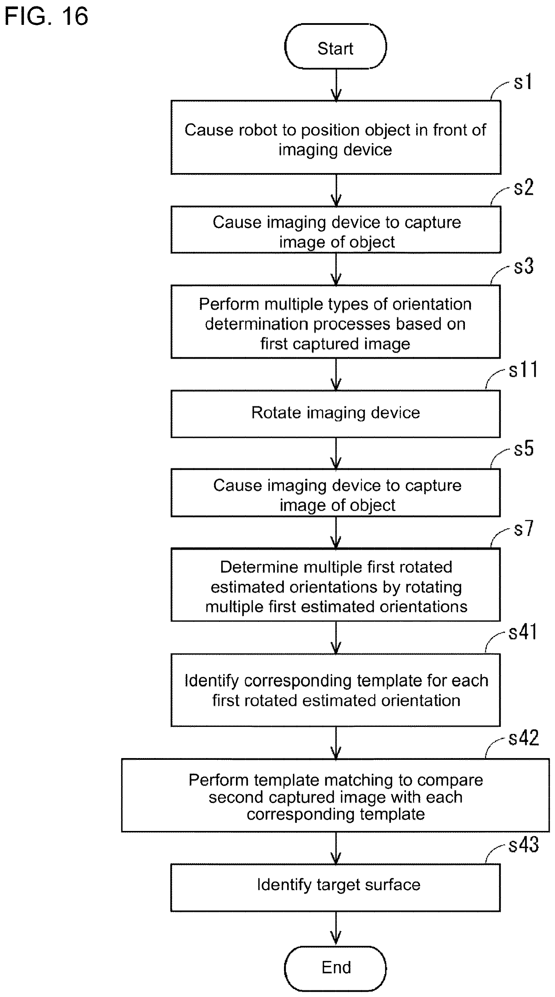

Note that step s11 may be performed to rotate the imaging device 8 by the angle -W, instead of step s4 to rotate the object 10 by the angle +W, as shown in FIG. 16.

In the examples in FIGs. 15 and 16, template matching is performed to compare the corresponding templates identified for the multiple first rotated estimated orientations with the second captured image. The results of the template matching are used to identify the specific surface facing the imaging device 8 when the first captured image is generated by the imaging device 8. Thus, when the appearance of the object 10 in the second captured image varies greatly depending on the specific surface facing the imaging device 8 when the first captured image is generated, the specific surface facing the imaging device 8 when the first captured image is generated can be identified accurately.

In examples other than the examples shown in FIGs. 15 and 16, the orientation estimation processes may use a method other than template matching to estimate the orientation of the object 10. For example, the estimator 20 may estimate the orientation of the object 10 using a nonlinear function such as a neural network. For the estimator 20 estimating the orientation of the object 10 using a neural network, for example, the orientation estimation process for the front surface may use a neural network trained on many images of the object 10 captured from various angles from the front surface 101 side. The orientation estimation process for the back surface may use a neural network trained on many images of the object 10 captured from various angles from the back surface 102 side.

Although the first rotated estimated orientations are determined based on the first estimated orientations in the examples in FIGs. 4 and 11, the first rotated estimated orientations may be determined based directly on the first captured image, without the first estimated orientations being determined. For example, an estimator (e.g., a neural network) trained through machine learning to estimate the first rotated estimated orientation resulting from the front surface process may estimate the first rotated estimated orientation resulting from the front surface process based on the first captured image and the angle +W about the rotation axis J. The first rotated estimated orientation resulting from the front surface process estimated by the estimator corresponds to an estimated orientation of the object 10 in the orientation rotated from the first orientation by the angle +W about the rotation axis J, with the front surface 101 of the object 10 assumed to be facing the imaging device 8. The estimator trained through machine learning to estimate the first rotated estimated orientation resulting from the back surface process may estimate the first rotated estimated orientation resulting from the back surface process based on the first captured image and the angle +W about the rotation axis J. The first rotated estimated orientation resulting from the back surface process estimated by the estimator corresponds to an estimated orientation of the object 10 in the orientation rotated from the first orientation by the angle +W about the rotation axis J, with the back surface 102 of the object 10 assumed to be facing the imaging device 8.

The examples in FIGs. 4 and 11 use the multiple first rotated estimated orientations obtained by rotating the multiple first estimated orientations in the same manner as or in a similar manner to when the orientation of the object 10 is rotated from the first orientation to the second orientation. The examples may instead use multiple second rotated estimated orientations obtained by rotating the multiple second estimated orientations in a direction opposite the direction in which the orientation of the object 10 is rotated from the first orientation to the second orientation. In this case, in step s7 described above, the identifier 21 determines the multiple second rotated estimated orientations by rotating the multiple second estimated orientations obtained in step s6 in a direction opposite the direction in which the orientation of the object 10 is rotated from the first orientation to the second orientation. For example, the identifier 21 determines a second rotated estimated orientation (also referred to as a second rotated estimated orientation resulting from the front surface process) by rotating the second estimated orientation resulting from the front surface process in a direction opposite the direction in which the orientation of the object 10 is rotated from the first orientation to the second orientation. The identifier 21 determines a second rotated estimated orientation (also referred to as a second rotated estimated orientation resulting from the back surface process) by rotating the second estimated orientation resulting from the back surface process in a direction opposite the direction in which the orientation of the object 10 is rotated from the first orientation to the second orientation. The identifier 21 determines, as the second rotated estimated orientation resulting from the front surface process, the orientation obtained by rotating the second estimated orientation resulting from the front surface process about the rotation axis J by the angle -W in the imaging device coordinate system. The identifier 21 determines, as the second rotated estimated orientation resulting from the back surface process, the orientation obtained by rotating the second estimated orientation resulting from the back surface process about the rotation axis J by the angle -W in the imaging device coordinate system.

As indicated by the examples described above, when the first captured image includes the front-facing object 10 in the first orientation, the second rotated estimated orientation resulting from the front surface process is close to the first estimated orientation resulting from the front surface process. In contrast, the second rotated estimated orientation resulting from the back surface process differs greatly from the first estimated orientation resulting from the back surface process. Thus, when the first captured image includes the front-facing object 10 in the first orientation, or specifically, when the target surface is the front surface 101, the second rotated estimated orientation resulting from the front surface process has a higher degree of similarity to the first estimated orientation resulting from the front surface process, and the second rotated estimated orientation resulting from the back surface process has a lower degree of similarity to the first estimated orientation resulting from the back surface process.

When the first captured image includes the back-facing object 10 in the first orientation, the second rotated estimated orientation resulting from the back surface process is close to the first estimated orientation resulting from the back surface process. In contrast, the second rotated estimated orientation resulting from the front surface process differs greatly from the first estimated orientation resulting from the front surface process. Thus, when the first captured image includes the back-facing object 10 in the first orientation, or specifically, when the target surface is the back surface 102, the second rotated estimated orientation resulting from the back surface process has a higher degree of similarity to the first estimated orientation resulting from the back surface process, and the second rotated estimated orientation resulting from the front surface process has a lower degree of similarity to the first estimated orientation resulting from the front surface process.

When multiple second rotated estimated orientations are determined in step s7 described above, the identifier 21 performs a fourth comparison process in step s8 described above to compare, for each corresponding specific surface, the multiple second rotated estimated orientations with the multiple first rotated estimated orientations as in the first comparison process. In step s9 described above, the identifier 21 then identifies the target surface based on the results of the fourth comparison process in step s8. In step s9, the identifier 21 determines that the front surface 101 is the target surface when the results of the fourth comparison process indicate that the degree of similarity between the second rotated estimated orientation resulting from the front surface process and the first estimated orientation resulting from the front surface process is higher than the degree of similarity between the second rotated estimated orientation resulting from the back surface process and the first estimated orientation resulting from the back surface process. When the results of the fourth comparison process indicate that the degree of similarity between the second rotated estimated orientation resulting from the back surface process and the first estimated orientation resulting from the back surface process is higher than the degree of similarity between the second rotated estimated orientation resulting from the front surface process and the first estimated orientation resulting from the front surface process, the identifier 21 determines that the back surface 102 is the target surface.

Note that the second rotated estimated orientations may be determined based directly on the second captured image, without the second estimated orientations being determined. For example, an estimator (e.g., a neural network) trained through machine learning to estimate the second rotated estimated orientation resulting from the front surface process may estimate the second rotated estimated orientation resulting from the front surface process based on the second captured image and the angle -W about the rotation axis J. The second rotated estimated orientation resulting from the front surface process estimated by the estimator corresponds to an estimated orientation of the object 10 in the orientation rotated from the second orientation about the rotation axis J by the angle -W, with the front surface 101 of the front-facing object 10 in the second orientation assumed to be facing the imaging device 8. An estimator trained through machine learning to estimate the second rotated estimated orientation resulting from the back surface process may estimate the second rotated estimated orientation resulting from the back surface process based on the second captured image and the angle -W about the rotation axis J. The second rotated estimated orientation resulting from the back surface process estimated by the estimator corresponds to an estimated orientation of the object 10 in the orientation rotated from the second orientation about the rotation axis J by the angle -W, with the back surface 102 of the object 10 assumed to be facing the imaging device 8.

The processing device has been described above in detail, but the above structures are illustrative in all aspects, and the present disclosure is not limited to the above structures. The above examples may be combined in any manner unless any contradiction arises. Examples other than those illustrated above may also be implemented without departing from the scope of the present disclosure.

In the above examples, the front surface of the object 10 in the first captured image has an appearance as illustrated in the leftmost diagram in FIG. 3, and the back surface has an appearance as illustrated in the third diagram from the left in FIG. 3. The appearances of the surfaces are not limited to these examples. For example, the front surface may have an appearance as illustrated in the leftmost diagram in FIG. 7, and the back surface may have an appearance as illustrated in the second diagram from the left in FIG. 7. The front surface may have an appearance as illustrated in the leftmost diagram in FIG. 8, and the back surface may have an appearance as illustrated in the second diagram from the left in FIG. 8. In these cases, the angle W may be any small angle.

The present disclosure provides the structures described below.

In one embodiment, (1) a processing device includes a controller that obtains, from an imaging device, a first image of an object in a first orientation. The object includes a plurality of surfaces having appearances similar to each other. The controller identifies, from the plurality of surfaces, a target surface facing the imaging device. The controller further obtains a second image of the object in a second orientation different from the first orientation, and identifies the target surface based on the first image and the second image.

(2) In the processing device according to (1), the controller obtains, based on the first image, a plurality of first estimated orientations of the object estimated using each of the plurality of surfaces as the target surface, obtains, based on the second image, a plurality of second estimated orientations of the object estimated using each of the plurality of surfaces as the target surface, and identifies the target surface based on the plurality of first estimated orientations and the plurality of second estimated orientations.

(3) In the processing device according to (2), the second orientation is an orientation of the object rotated relative to the imaging device to be different from the first orientation. The controller obtains a plurality of first rotated estimated orientations by rotating the plurality of first estimated orientations, performs a comparison process to compare the plurality of first rotated estimated orientations with the plurality of second estimated orientations for each corresponding surface of the plurality of surfaces, and identifies the target surface based on a result of the comparison process.

(4) In the processing device according to (2), the controller obtains, based on the plurality of first estimated orientations, a plurality of first transformed estimated orientations indicating an orientation of the object in the first image in a coordinate system of a holder holding the object, obtains, based on the plurality of second estimated orientations, a plurality of second transformed estimated orientations indicating an orientation of the object in the second image in the coordinate system of the holder, and identifies the target surface based on the plurality of first transformed estimated orientations and the plurality of second transformed estimated orientations.

(5) In the processing device according to (1), the second orientation is an orientation of the object rotated relative to the imaging device to be different from the first orientation. The controller obtains, based on the first image, a plurality of first estimated orientations of the object estimated using each of the plurality of surfaces as the target surface, obtains a plurality of first rotated estimated orientations by rotating the plurality of first estimated orientations, and identifies the target surface based on a degree of similarity between each of the plurality of first rotated estimated orientations and the second image.

(6) In the processing device according to (5), the controller performs template matching to compare an image with a plurality of templates each associated with a corresponding orientation of the object, identifies a corresponding template for each of the plurality of first rotated estimated orientations, compares the corresponding template with the second image in the template matching, and identifies the target surface based on a result of the template matching.

(7) In the processing device according to any one of (1) to (6), the controller obtains the second image of the object in the second orientation changed by movement of a holder holding the object.

(8) In the processing device according to any one of (1) to (6), the controller obtains the second image of the object in the second orientation changed by movement of the imaging device.

(9) In the processing device according to any one of (1) to (8), the controller obtains, based on the first image, a plurality of first estimated orientations of the object estimated using each of the plurality of surfaces as the target surface, and determines, among the plurality of first estimated orientations, a first estimated orientation corresponding to the identified target surface as a final estimation result for an orientation of the object when the first image is generated by the imaging device.

(10) In the processing device according to any one of (2) to (9), the controller determines, among the plurality of second estimated orientations or the plurality of first rotated estimated orientations, a second estimated orientation or a first rotated estimated orientation corresponding to the identified target surface as a final estimation result for an orientation of the object when the second image is generated by the imaging device.

(11) In the processing device according to (1), the controller obtains, based on the second image, a plurality of second estimated orientations of the object estimated using each of the plurality of surfaces as the target surface, and identifies the target surface based on the plurality of second estimated orientations and the first image.

(12) In the processing device according to (11), the second orientation is an orientation of the object rotated relative to the imaging device to be different from the first orientation. The controller obtains a plurality of second rotated estimated orientations by rotating the plurality of second estimated orientations, and identifies the target surface based on the plurality of second rotated estimated orientations and the first image.

(13) In the processing device according to (12), the controller obtains, based on the first image, a plurality of first estimated orientations of the object estimated using each of the plurality of surfaces as the target surface, and identifies the target surface based on the plurality of second rotated estimated orientations and the plurality of first estimated orientations.

(14) A program is a program for causing a computer to function as the processing device according to any one of (1) to (13).

### REFERENCE SIGNS

- 1: processing device
- 2: controller
- 4, 5: interface
- 8: imaging device
- 10: object
- 30: program
- 91: end effector (holder)
- 101: front surface
- 102: back surface

## Claims

1. A processing device, comprising:
a controller configured to obtain, from an imaging device, a first image of an object in a first orientation, the object including a plurality of surfaces having appearances similar to each other, the controller being configured to identify, from the plurality of surfaces, a target surface facing the imaging device,
the controller being further configured to
obtain a second image of the object in a second orientation different from the first orientation, and
identify the target surface based on the first image and the second image.

2. The processing device according to claim 1, wherein
the controller is configured to
obtain, based on the first image, a plurality of first estimated orientations of the object estimated using each of the plurality of surfaces as the target surface,
obtain, based on the second image, a plurality of second estimated orientations of the object estimated using each of the plurality of surfaces as the target surface, and
identify the target surface based on the plurality of first estimated orientations and the plurality of second estimated orientations.

3. The processing device according to claim 2, wherein
the second orientation is an orientation of the object rotated relative to the imaging device to be different from the first orientation, and
the controller is configured to
obtain a plurality of first rotated estimated orientations by rotating the plurality of first estimated orientations, and
perform a comparison process to compare the plurality of first rotated estimated orientations with the plurality of second estimated orientations for each corresponding surface of the plurality of surfaces, and identify the target surface based on a result of the comparison process.

4. The processing device according to claim 2, wherein
the controller is configured to
obtain, based on the plurality of first estimated orientations, a plurality of first transformed estimated orientations indicating an orientation of the object in the first image in a coordinate system of a holder holding the object,
obtain, based on the plurality of second estimated orientations, a plurality of second transformed estimated orientations indicating an orientation of the object in the second image in the coordinate system of the holder, and
identify the target surface based on the plurality of first transformed estimated orientations and the plurality of second transformed estimated orientations.

5. The processing device according to claim 1, wherein
the second orientation is an orientation of the object rotated relative to the imaging device to be different from the first orientation, and
the controller is configured to
obtain, based on the first image, a plurality of first estimated orientations of the object estimated using each of the plurality of surfaces as the target surface,
obtain a plurality of first rotated estimated orientations by rotating the plurality of first estimated orientations, and
identify the target surface based on a degree of similarity between each of the plurality of first rotated estimated orientations and the second image.

6. The processing device according to claim 5, wherein
the controller is configured to
perform template matching to compare an image with a plurality of templates each associated with a corresponding orientation of the object,
identify a corresponding template for each of the plurality of first rotated estimated orientations, and
compare the corresponding template with the second image in the template matching, and identify the target surface based on a result of the template matching.

7. The processing device according to any one of claims 1 to 6, wherein
the controller is configured to obtain the second image of the object in the second orientation changed by movement of a holder holding the object.

8. The processing device according to any one of claims 1 to 6, wherein
the controller is configured to obtain the second image of the object in the second orientation changed by movement of the imaging device.

9. The processing device according to any one of claims 1 to 8, wherein
the controller is configured to
obtain, based on the first image, a plurality of first estimated orientations of the object estimated using each of the plurality of surfaces as the target surface, and
determine, among the plurality of first estimated orientations, a first estimated orientation corresponding to the identified target surface as a final estimation result for an orientation of the object when the first image is generated by the imaging device.

10. The processing device according to any one of claims 2 to 9, wherein
the controller is configured to determine, among the plurality of second estimated orientations or the plurality of first rotated estimated orientations, a second estimated orientation or a first rotated estimated orientation corresponding to the identified target surface as a final estimation result for an orientation of the object when the second image is generated by the imaging device.

11. The processing device according to claim 1, wherein
the controller is configured to
obtain, based on the second image, a plurality of second estimated orientations of the object estimated using each of the plurality of surfaces as the target surface, and
identify the target surface based on the plurality of second estimated orientations and the first image.

12. The processing device according to claim 11, wherein
the second orientation is an orientation of the object rotated relative to the imaging device to be different from the first orientation, and
the controller is configured to
obtain a plurality of second rotated estimated orientations by rotating the plurality of second estimated orientations, and
identify the target surface based on the plurality of second rotated estimated orientations and the first image.

13. The processing device according to claim 12, wherein
the controller is configured to
obtain, based on the first image, a plurality of first estimated orientations of the object estimated using each of the plurality of surfaces as the target surface, and
identify the target surface based on the plurality of second rotated estimated orientations and the plurality of first estimated orientations.

14. A program for causing a computer to function as the processing device according to any one of claims 1 to 13.
